# EUROPEAN PATENT SPECIFICATION

(11) **EP 1 120 223 B1**
(45) Date of publication and mention of the grant of the patent: **16.06.2004**
(21) Application number: 01101650.8
(22) Date of filing: 26.01.2001
(51) Int. Cl.: B29C 49/22, B65D 65/40, B32B 27/36

(54) **Coinjection stretch blow molded container and parison therefor**
Kospritzgegossener, streckgeblasener Behälter und Vorformling dafür
Récipient formé par étirage-soufflage d'une paraison co-injecté et paraison pour sa fabrication

(30) Priority: 28.01.2000 JP 2000019587
(43) Date of publication of application: 01.08.2001
(73) Proprietor: KURARAY CO., LTD., Kurashiki-City Okayama Prefecture 710 (JP)
(72) Inventor: Tai, Shinji, Kurashiki-City, Okayama-Pref. (JP); Shimo, Hiroyuki, Kurashiki-City, Okayama-Pref. (JP)
(74) Representative: VOSSIUS & PARTNER

(56) References cited:
- EP-A- 0 949 056
- JP-A- 3 112 654
- US-A- 4 349 644
- US-A- 4 590 131
- US-A- 4 798 697
- "WPI WORLD PATENT INF" WPI WORLD PATENT INF, XP002128104
- DATABASE WPI Section Ch, Week 198844 Derwent Publications Ltd., London, GB; Class A18, AN 1988-312288 XP002168222 & JP 63 230757 A (KURARAY CO LTD), 27 September 1988 (1988-09-27)
- DATABASE WPI Section Ch, Week 198540 Derwent Publications Ltd., London, GB; Class A17, AN 1985-245907 XP002168223 & JP 60 161447 A (JAPAN SYNTHETIC RUBBER CO LTD), 23 August 1985 (1985-08-23)

## Description

The present invention relates to coinjection stretch blow molded containers with greatly improved impact delamination resistance, which have good gas barrier properties against oxygen, carbon dioxide gas and others and good appearance, and are used as containers for e.g. beverages, edibles and cosmetics.

Thermoplastic polyester (PES) containers as produced through stretch blow molding have various excellent properties including good transparency, good mechanical characteristics and good flavor barrier properties, and are sanitary and safe for daily use as releasing few residual monomers and other harmful additives . Therefore, they have many applications in various fields. However, since their gas barrier properties are not always satisfactory, drinks, foods and others in them could be stored only a relatively short period of time.

In order to overcome the drawback, various methods of combining a thermoplastic polyester with an ethylene-vinyl alcohol copolymer (EVOH) with good gas barrier properties to give laminated structures have heretofore been proposed. Prior to stretch blowing, a preform (parison) is first formed. For forming the preform, e.g. coinjection molding, coextrusion molding, multi-stage injection molding are employed. Of those, coinjection molding is characterized in that it may be effected in simple apparatus, that it gives few scraps such as trimmings and others, and that the moldings produced through it could have a structure with an EVOH layer completely covered with e.g. a PES layer and therefore, even though the moldings have no adhesive resin (Ad) layer between the EVOH layer and the PES layer they could be well multi-layered containers with seemingly good appearance owing to the adhesion effect of the ambient atmospheric pressure.

However, when conventional containers filled with drinks, foods and others are shocked, for example, by dropping them, the PES layer and the EVOH layer constituting them are easily delaminated, thereby causing a serious problem of worsening the appearance of the containers. In that situation, coinjection molded containers with an Ad layer-having structure of PES/Ad/EVOH/Ad/PES (see JP-A-56-501040), those with an Ad layer-having structure of PES/Ad/EVOH/Ad/PES/Ad/EVOH/Ad/PES (see JP-A-50-135169, JP-A-61-152411, JP-A-61-152412, JP-A-61-259944) have been investigated. However, the equipment for producing them is often extremely complicated, and, in addition, controlling the thickness of each layer constituting them is often difficult. Therefore, those containers are inferior to others having no Ad layer in view of the production costs and the producibility.

Other methods have also been investigated of blending EVOH with any other resins for increasing the delamination resistance of containers with no Ad layer. For example, in JP-A-1-176554 a method of blending EVOH with a polyamide-ester type thermoplastic resin, in JP-A-1-182023 a method of blending it with a metal-containing polyester type thermoplastic resin, and in JP-A-3-175032 a method of blending it with a thermoplastic polyurethane is disclosed. However, blending EVOH with such other resins in producing containers lowers the transparency of the containers produced, and the containers will have extremely bad appearance. In addition, the blending increases the production costs, and, depending on the type of the resins to be blended, there will occur still another problem in that the melt stability of the blends will be poor.

In JP-A-3-175033 a method of adding at least one salt selected from titanium salts, cobalt salts, manganese salts, antimony salts and germanium salts to EVOH for increasing the delamination resistance of containers with no AD layer is disclosed. However, the method is still problematic in that the effect of such a metal salt as used therein for improving the delamination resistance of containers is not satisfactory and, in addition, the melt stability of EVOH with the metal salt added thereto is lowered.

In JP-A-1-204736 a method of blending an essential component of EVOH with a minor component of EVOH for increasing the delamination resistance of containers with no Ad layer, in which the minor component EVOH has a larger ethylene content, a lower degree of saponification, a lower melting point and a larger melt index than the essential component EVOH is disclosed. However, blending two different types of EVOH, between which the difference in the ethylene content is 30 mol% or more, as in Examples of the publication, lowers the transparency of the containers produced, and the containers will have extremely bad appearance. In addition, the blending increases the production costs, and, causes the problem that the melt stability of the blends is poor.

In JP-A-11-348196 and EP-A-0949056 a coinjection stretch blow molded container having good impact delamination resistance is disclosed. It comprises a thermoplastic polyester layer (layer a) and an ethylene-vinyl alcohol copolymer layer (layer b), with the layer a being kept in direct contact with the both surfaces of the layer b, wherein the ethylene-vinyl alcohol copolymer is a mixture of two ethylene-vinyl alcohol copolymers (b1, b2) in a ratio by weight (b1/b2) falling between 10/90 and 90/10, and satisfies the following formulae (A) to (F), and its differential scanning calorimetry (DSC) gives a single peak for crystal fusion:$\text{25 ≤ ETb1 ≤ 48}$$\text{99 ≤ SDb1}$$\text{25 ≤ ETb2 ≤ 48}$$\text{92 ≤ SDb2 ≤ 99}$$\text{|ETb2 - ETb1| ≤ 8}$$\text{1 ≤ (SDb2 - SDb1) ≤ 8}$ wherein;
ETb1 indicates the ethylene content (mol%) of the ethylene-vinyl alcohol copolymer (b1),
ETb2 indicates the ethylene content (mol%) of the ethylene-vinyl alcohol copolymer (b2),
SDb1 indicates the degree of saponification (%) of the ethylene-vinyl alcohol copolymer (b1), and
SDb2 indicates the degree of saponification (%) of the ethylene-vinyl alcohol copolymer (b2).

The resin composition described in the publication is a mixture of two EVOHs, but the difference between them in the ethylene content is at most 8 mol% as in the above formula (E), and the resin composition gives a single peak for crystal fusion in its DSC. The resin composition of the type could improve the impact delamination resistance of containers comprising it, but could not improve the gas-barrier properties of the containers. In addition, the thermal stability of the resin composition is not good. US 4,590,131 discloses a packaging material having at least one layer comprising an ethylene-vinyl alcohol copolymer having a vinyl alcohol content of 40 to 80 mol% and a residual vinyl ester content lower than 4 mol%, wherein the ethylene-vinyl alcohol copolymer consists of a composition comprising a plurality of copolymers differing in the vinyl alcohol content, said composition shows a plurality of endothermic peaks in a fusion curve by a differential scanning calorimeter, the composition has specified fusion characteristics and the composition has a molecular weight distribution (Mw/Mn) of at least 2.5.

The object of the present invention is to provide multi-layered containers through stretch-blow molding of a preform which is prepared through coinjection-molding of a polyester resin and an EVOH resin mixture. Even though not having an adhesive resin layer, the containers have good impact delamination resistance and good gas-barrier properties. Other advantages of the containers are that their transparency is high, and the resin melts for them are stable.

The object is attained by providing a coinjection stretch blow molded container and preform therefor as defined in the annexed claims 1 and 7.

The pellets of the resin composition are injection-molded, and the particles of the ethylene-vinyl alcohol copolymer (b2) dispersed in the matrix of the ethylene-vinyl alcohol copolymer (b1) in the starting resin composition have a mean particle size of at most 0.8 µm.

Preferably, the melt index of the two EVOHs (b1, b2) satisfies the following formula (8):$\text{0.1 ≤ MIb1/MIb2 ≤ 10}$ wherein;
MIb1 indicates the melt index (g/10 min, at 190°C under a load of 2160 g) of the ethylene-vinyl alcohol copolymer (b1), and
MIb2 indicates the melt index (g/10 min, at 190°C under a load of 2160 g) of the ethylene-vinyl alcohol copolymer (b2).

Still preferably, the intrinsic viscosity IVa (dl/g) of the thermoplastic polyester satisfies the following formula (9) and the melt index MIb (g/10 min, at 190°C under a load of 2160 g) of the resin composition satisfies the following formula (10):$\text{0.60 ≤ IVa ≤ 0.90}$$\text{0.1 ≤ MIb ≤ 10}$

Still preferably, the haze of the body of the container is at most 5 %.

Still preferably, the container is for carbonated beverages, and has a capacity of at most 800 ml.

Fig. 1 shows the DSC chart of the EVOH resin composition in Example 1.

Fig. 2 shows the DSC chart of the EVOH resin composition in Comparative Example 2.

Fig. 3 shows the DSC chart of the EVOH resin composition in Comparative Example 3.

Fig. 4 shows the DSC chart of the EVOH resin composition in Comparative Example 4.

Fig. 5 shows the DSC chart of the EVOH resin composition in Comparative Example 5.

Fig. 6 is a TEM (transmission electronmicroscopic) image showing the dispersion morphology of the EVOH resin composition pellets in Example 1.

Fig. 7 is a TEM image showing the dispersion morphology of the EVOH resin composition pellets in Comparative Example 4.

Fig. 8 is a TEM image showing the dispersion morphology of the EVOH resin composition pellets in Comparative Example 5.

Fig. 9 is a TEM image showing the dispersion morphology of the EVOH resin composition layer in the blow-molded bottle in Example 1.

The multi-layered container of the invention comprises a thermoplastic polyester layer (layer a) and an ethylene-vinyl alcohol copolymer layer (layer b).

As the polyester resin for the thermoplastic polyester layer (layer a) in the invention, employable is a condensed polymer that consists essentially of an aromatic dicarboxylic acid or its alkyl ester and a diol. For more favorably attaining the object of the invention, preferred is a polyester resin consisting essentially of an ethylene terephthalate component. In the polyester resin to be used for the layer a in the invention, in general, it is desirable that the total proportion (mol%) of terephthalic acid units and ethylene glycol units constituting the polyester is at least 70 mol% relative to the total mols of all constituent units that constitute the polyester, more preferably at least 90 mol%. If the total proportion of terephthalic acid units and ethylene glycol units constituting it is smaller than 70 mol%, the copolyester will be amorphous. When hot filled, stretched containers that comprise such an amorphous copolyester will greatly shrink, and have poor heat resistance. In addition, their strength will be lowered. Moreover, while being polymerized in a solid phase to reduce the oligomers therein, the resin will often soften to be glutinous, and its production is often difficult.

The polyester resin for the layer a in the invention may be optionally copolymerized with any other bifunctional compound units except terephthalic acid units and ethylene glycol units, within the range not significantly interfering with the workability, the strength, the heat resistance and other properties of the resin. The proportion (mol%) of the additional units is preferably at most 30 mol% relative to the total mols of all constituent units that constitute the polyester (A), more preferably at most 20 mol%, even more preferably at most 10 mol%. As the preferred bifunctional compound units that may be in the resin, mentioned is at least one bifunctional compound unit selected from dicarboxylic acid units, diol units and hydroxycarboxylic acid units. Any and every bifunctional compound unit except terephthalic acid units and ethylene glycol units is employable for the purpose, including, for example, aliphatic bifunctional compound units, alicyclic bifunctional compound units and aromatic bifunctional compound units.

As examples of the aliphatic bifunctional compound units, mentioned are divalent structure units to be derived from aliphatic dicarboxylic acids and their ester-forming derivatives, such as malonic acid, succinic acid, adipic acid, azelaic acid and sebacic acid; from aliphatic hydroxycarboxylic acids and their ester-forming derivatives, such as 10-hydroxyoctadecanoic acid, lactic acid, hydroxyacrylic acid, 2-hydroxy-2-methylpropionic acid and hydroxybutyric acid, and from aliphatic diols such as trimethylene glycol, tetramethylene glycol, hexamethylene glycol, neopentyl glycol, methylpentanedioland diethylene glycol. Neopentyl glycol units are preferred as the aliphatic bifunctional compound units, since copolyesters comprising them are easy to produce and since the units do not lower the heat resistance of the multi-layered containers of the invention comprising them.

As examples of the alicyclic bifunctional compound units, mentioned are divalent structure units to be derived from alicyclic dicarboxylic acids and their ester-forming derivatives, such as cyclohexanedicarboxylic acid, norbornenedicarboxylic acid and tricyclodecanedicarboxylic acid; alicyclic hydroxycarboxylic acids and their ester-forming derivatives such as hydroxymethylcyclohexanecarboxylic acid, hydroxymethylnorbornenecarboxylic acid and hydroxymethyltricyclodecanecarboxylic acid; and alicyclic diols such as cyclohexanedimethanol, norbornenedimethanoland tricyclodecanedimethanol. Cyclohexanedimethanol units or cyclohexanedicarboxylic acid units are preferred as the alicyclic bifunctional compound units, since copolyesters comprising them are easy to produce and since they improve the drop-impact strength of the multi-layered containers of the invention comprising them and much enhances the transparency thereof.

The cyclohexanedimethanol unit as referred to herein is meant to indicate at least one divalent unit selected from 1,2-cyclohexanedimethanol units, 1,3-cyclohexanedimethanol units and 1,4-cyclohexanedimethanol units. The cyclohexanedicarboxylic acid unit also referred to herein is to indicate at least one divalent unit selected from 1,2-cyclohexanedicarboxylic acid units, 1,3-cyclohexanedicarboxylic acid units and 1,4-cyclohexanedicarboxylic acid units.

Of the alicyclic bifunctional compound units noted above, more preferred are 1,4-cyclohexanedimethanol units and 1,4-cyclohexanedicarboxylic acid units, since they are easily available and since copolyesters comprising them and even moldings from such copolyesters could have higher drop-impact strength.

The aromatic bifunctional compound units may be any of aromatic dicarboxylic acid units, aromatic hydroxycarboxylic acid units and aromatic diol units. Their examples include divalent units to be derived from aromatic dicarboxylic acids except terephthalic acid and their ester-forming derivatives, such as isophthalic acid, phthalic acid, biphenyldicarboxylic acid, diphenyl ether-dicarboxylic acid, diphenyl sulfone-dicarboxylic acid, diphenyl ketone-dicarboxylic acid, sodium sulfoisophthalate, 2,6-naphthalenedicarboxylic acid, 1,4-naphthalenedicarboxylic acid and 2,7-naphthalenedicarboxylic acid; aromatic hydroxycarboxylic acids and their ester-forming derivatives, such as hydroxybenzoic acid, hydroxytoluic acid, hydroxynaphthoic acid, 3-(hydroxyphenyl)propionic acid, hydroxyphenylacetic acid and 3-hydroxy-3-phenylpropionic acid, and aromatic diols such as bisphenol compounds and hydroquinone compounds.

At least one of isophthalic acid units, phthalic acid units, naphthalenedicarboxylic acid units and 4,4'-biphenyldicarboxylic acid units are preferred as the aromatic dicarboxylic acid units for bifunctional compound units, since copolyesters comprising them are easy to produce and since the monomer costs for them are low.

In particular, isophthalic acid is advantageous in that the moldability of copolyesters comprising it is good and that the range of the molding conditions for obtaining good moldings from the copolyesters is broad while the percentage of failed moldings from them is low. In addition, the acid is further advantageous in that it retards the crystallization rate of the copolyesters comprising it to thereby prevent the moldings of the copolyesters from being whitened.

Naphthalenedicarboxylic acid is also advantageous in that it increases the glass transition point of copolyesters comprising it and even increases the heat resistance of containers comprising the copolyesters. In addition, naphthalenedicarboxylic acid-copolymerized polyesters absorb UV rays, and are therefore preferably used in producing containers that are desired to be resistant to UV rays.

For the purpose of protecting the contents of coinjection stretch blow molded containers from UV rays, it is desirable that the thermoplastic polyester to be used for producing the containers has a naphthalenedicarboxylic acid component in an amount of from 0.1 to 15 mol%, more preferably from 1.0 to 10 mol%, relative to the sum total of all dicarboxylic acid components constituting it. 2,6-naphthalenedicarboxylic acid component is preferred as naphthalenedicarboxylic acid, since copolyesters comprising it are easy to produce and since the monomer cost for it is low.

As examples of the aromatic bifunctional compound units, mentioned are diol units to be derived from 2,2-bis[4-(2-hydroxyethoxy)phenyl]propane, 2-{4-[2-(2-hydroxyethoxy)ethoxy)phenyl}-2-[4-(2-hydroxyethoxy)phenyl]propane, 2,2-bis{4-[2-(2-hydroxyethoxy)ethoxy]phenyl}propane, bis[4-(2-hydroxyethoxy)phenyl]sulfone, {4-[(2-hydroxyethoxy)ethoxy]phenyl}-[4-(2-hydroxyethoxy)phenyl]sulfone, 1,1-bis[4-(2-hydroxyethoxy)phenyl]cyclohexane, 1-{4-[2-(2-hydroxyethoxy)ethoxy)ethoxy]phenyl}-1-[4-(2-hydroxyethoxy)phenyl]cyclohexane, 1,1-bis[4-[2-(2-hydroxyethoxy)ethoxy]phenyl}cyclohexane, 2,2-bis[4-(2-hydroxyethoxy)-2,3,5,6-tetrabromophenyl]propane, 1,4-bis(2-hydroxyethoxy)benzene, 1-(2-hydroxyethoxy)-4-[2-(2-hydroxyethoxy)ethoxy]benzene or 1,4-bis[2-(2-hydroxyethoxy)ethoxy]benzene. Of those diol units, preferred are 2,2-bis[4-(2-hydroxyethoxy)phenyl]propane units, bis[4-(2-hydroxyethoxy)phenyl]sulfone units and 1,4-bis(2-hydroxyethoxy)benzene units, since polyester resins comprising any of those diol units are easy to produce while having good melt stability, and since moldings from such resins have good color tone and good impact resistance.

The polyester resin to be used for the layer a in the invention may have one or more bifunctional compound units of those mentioned hereinabove.

The polyester resin for the layer a in the invention may contain a small amount of diethylene glycol units from diethylene glycol, which is a dimer of an ethylene glycol component and is formed as a minor by-product in the process of producing the polyester resin. However, if the polyester resin for use in the invention contains a large amount of such diethylene glycol units, its glass transition point will lower to cause some problems in that the heat resistance of the resin is lowered and the resin is unfavorably colored. If so, the heat resistance, the mechanical strength and the color tone of moldings such as bottles and others to be produced from the polyester resin will be degraded. Therefore, it is desirable that the proportion of the diethylene glycol units in the polyester resin is minimized as much as possible. For these reasons, it is desirable that the proportion of the diethylene glycol units in the polyester resin for use in the invention is smaller than 3 mol%, more preferably at most 2 mol%, relative to the total mols of all constituent units of the polyester resin.

The polyester resin to be used for the layer a in the invention may be optionally copolymerized with any other polyfunctional compound units except terephthalic acid units and ethylene glycol units. Preferred polyfunctional compound units are derived from at least one polyfunctional compound having at least three groups selected from carboxyl groups, hydroxyl groups and their ester-forming groups. It is desirable that the proportion of the polyfunctional compound units to be in the polyester resin for use in the invention is at most 0.5 mol% relative to the total mols of all constituent units of the polyester.

The polyfunctional compound units are not specifically defined, provided that they are derived from polyfunctional compounds having at least three, same or different groups selected from carboxyl groups, hydroxyl groups and their ester-forming groups. The polyfunctional compounds from which the polyfunctional compound units are derived may be any of polyfunctional compounds having at least three carboxyl groups only, those having at least three hydroxyl groups only, or those having at least three carboxyl and hydroxyl groups in total.

As preferred examples of the polyfunctional compound units, mentioned are those derived from aromatic polycarboxylic acids such as trimesic acid, trimellitic acid, 1,2,3-benzenetricarboxylic acid, pyromellitic acid and 1,4,5,8-naphthalenetetracarboxylic acid; aliphatic polycarboxylic acids such as 1,3,5-cyclohexanetricarboxylic acid; aromatic polyalcohols such as 1,3,5-trihydroxybenzene; aliphatic or alicyclic polyalcohols such as trimethylolpropane, pentaerythritol, glycerin and 1,3,5-cyclohexanetriol; aromatic hydroxycarboxylic acids such as 4-hydroxyisophthalic acid, 3-hydroxyisophthalic acid, 2,3-dihydroxybenzoic acid, 2,4-dihydroxybenzoic acid, 2,5-dihydroxybenzoic acid, 2,6-dihydroxybenzoic acid, protocatechuic acid, gallic acid and 2,4-dihydroxyphenylacetic acid; aliphatic hydroxycarboxylic acids such as tartaric acid and malic acid; and their ester-forming derivatives. The polyester resin for use as the layer a in the invention may contain only one or at least two polyfunctional compound units such as those mentioned above.

Of those mentioned above, the polyester resin for use as the layer a in the invention preferably contains at least one polyfunctional compound unit to be derived from trimellitic acid, pyromellitic acid, trimesic acid, trimethylolpropane and pentaerythritol, in view of the easiness in producing the polyesters and of the costs for their production.

In addition, the polyester resin for use as the layer a in the invention that optionally contains such polyfunctional compound units may further contain, as still other optional units, monofunctional compound units to be derived from at least one of monofunctional compounds such as monocarboxylic acids, monoalcohols and their ester-forming derivatives.

In the polyester resin containing such monofunctional compound units, it is desirable that the proportion of the monofunctional compound units is at most 5 mol% (where the resin contains two or more different monofunctional compound units, the proportion indicates the total of all those units) relative to the total mols of all constituent units of the resin. This is because gelling of the resin that satisfies the requirement is retarded in many cases. More preferably, the proportion of the monofunctional compound units is at most 1 mol%. If the proportion of the monofunctional compound units is larger than 5 mol%, the polymerization rate in producing the polyester resin through melt polymerization or solid-phase polymerization will be low whereby the producibility of the polyester resin is unfavorably lowered.

In the polyester resin for use as the layer a in the invention, the monofunctional compound units function as blocking compound units to block the terminal groups of the molecular chain or the terminal groups of the branched chains in the polyester resin, whereby the polyester resin is prevented from being too much crosslinked and from being gelled. The monofunctional compound units are not specifically defined, but are preferably those derived from at least one of monocarboxylic acids, monoalcohols and their ester-forming derivatives.

As preferred examples of the monofunctional compound units, mentioned are the units derived from monofunctional compounds, for example, aromatic monocarboxylic acids such as benzoic acid, o-methoxybenzoic acid, m-methoxybenzoic acid, p-methoxybenzoic acid, o-methylbenzoic acid, m-methylbenzoic acid, p-methylbenzoic acid, 2,3-dimethylbenzoic acid, 2,4-dimethylbenzoic acid, 2,5-dimethylbenzoic acid, 2,6-dimethylbenzoic acid, 3,4-dimethylbenzoic acid, 3,5-dimethylbenzoic acid, 2,4,6-trimethylbenzoic acid, 2,4,6-trimethoxybenzoic acid, 3,4,5-trimethoxybenzoic acid, 1-naphthoic acid, 2-naphthoic acid, 2-biphenylcarboxylic acid, 1-naphthalenacetic acid and naphthalenacetic acid; aliphatic monocarboxylic acids such as n-octanoic acid, n-nonanoic acid, myristic acid, pentadecanoic acid, stearic acid, oleic acid, linolic acid and linolenic acid; ester-forming derivatives of those monocarboxylic acids; aromatic alcohols such as benzyl alcohol, 2,5-dimethylbenzyl alcohol, 2-phenethyl alcohol, phenol, 1-naphthol and 2-naphthol; and aliphatic or alicyclic monoalcohols such as pentadecyl alcohol, stearyl alcohol, polyethylene glycol monoalkyl ethers, polypropylene glycol monoalkyl ethers, polytetramethylene glycol monoalkyl ethers, oleyl alcohol and cyclododecanol. The polyester resin for use in the invention may contain only one or at least two monofunctional compound units such as those mentioned above.

Of the monofunctional compound units mentioned above, those to be derived from one or more monofunctional compounds selected from benzoic acid, 2,4,6-trimethoxybenzoic acid, 2-naphthoic acid, stearic acid and stearyl alcohol are preferred for the polyesters for use herein, in view of the easiness in producing the polyesters and of the costs for their production.

In view of its moldability, it is desirable that the thermoplastic polyester for use in the invention consists essentially of an ethylene terephthalate component and has a melting point TMa (°C) that satisfies the following formula (11):$\text{240 ≤ TMa ≤ 250}$

If its melting point TMa is higher than 250°C, the crystallization rate of the polyester resin is too high, and the resin crystallizes too rapidly while it is molded through injection molding or blow molding under heat, thereby often resulting in that the stretch orientation of the molded resin is degraded and the shapability thereof is worsened. In that case, bottles comprising the resin will be often whitened. For these reasons, the range of the molding conditions for obtaining good moldings will be narrowed and the percentage of failed moldings will increase. More preferably, the melting point TMa is not higher than 248°C.

On the other hand, if the melting point TMa is lower than 240°C, the heat resistance of multi-layered containers comprising the polyester resin will be low. If so, in addition, since the crystallinity of the polyester resin is too much lowered, the stretch orientation thereof is degraded and the mechanical strength thereof is lowered. Moreover, since the solid-phase polymerization temperature for the resin having such a low melting point must be inevitably lowered, the reaction speed for the resin will be lowered, thereby often causing a problem of low producibility of the resin. More preferably, the melting point TMa is not lower than 242°C, most preferably not lower than 244°C.

In order to obtain the polyester resin having such a preferred melting point, a polyester resin consisting essentially of an ethylene terephthalate component may be copolymerized with a suitable amount of a comonomer component. Concretely, it is desirable that the thus-copolymerized polyester resin contains a comonomer component in an amount of from 1 to 6 mol%, relative to the total mols of all constituent units of the polyester. More preferably, the comonomer component content of the polyester resin falls between 1.5 and 5 mol%, most preferably between 2 and 4 mol%.

In consideration of the degree of copolymerization with diethylene glycol that may be produced as a by-product in the process of producing the resin, some other comonomers may be added to the resin so as to make the resin copolymerized with them within the range noted above. Such other comonomers are not specifically defined, for which any monomers mentioned above are usable. Above all, preferred are neopentyl glycol, cyclohexanedimethanol, cyclohexanedicarboxylic acid, isophthalic acid, and naphthalenedicarboxylic acid.

It is desirable that the polyester resin for use as the layer a in the invention has a glass transition point TGa of not lower than 60°C. For the purpose of preventing shrinkage of the moldings to be obtained herein, the glass transition point TGa of the resin is more desirably not lower than 70°C. If the polyester resin has a glass transition point TGa of lower than 60°C, the moldings comprising it, especially those molded through stretch blow molding will shrink after they are taken out of the mold and their appearance will be poor. The shrinkage of the moldings taken out of the mold will be caused by the relaxation of the residual stress thereof.

The polyester resin for use as the layer a in the invention may be produced in various methods such as those to be mentioned below.

One preferred example of the polyester resin for use as the layer a in the invention is a polyester consisting essentially of an ethylene terephthalate component, and this may be produced from a starting material consisting mainly of a dicarboxylic acid component that comprises terephthalic acid or its ester-forming derivative, a diol component that comprises ethylene glycol, and optional components of being a bifunctional compound component, a polyfunctional component and a monofunctional component such as those mentioned above.

In this, it is desirable that the molar ratio of (all diol components)/(all dicarboxylic acid components) is defined to fall between 1.1/1 and 2.5/1.

To produce the polyester resin for use as the layer a in the invention, the components of the starting material noted above are esterified or interesterified and thereafter polycondensed in melt. If desired, the polyester thus produced after the melt polycondensation may be further polymerized in a solid phase.

It is desirable that the esterification or interesterification for producing the polyester resin for use as the layer a in the invention is effected under a pressure of at most about 5 kg/cm²(as absolute pressure) or under normal pressure, at a temperature falling between 180 and 300°C, while water or alcohol being produced is evaporated away.

The esterification may be effected in the absence of a catalyst. However, the interesterification is effected preferably in the presence of an interesterification catalyst that may be at least one of calcium, manganese, magnesium, zinc, titanium, sodium and lithium compounds. In particular, in view of the transparency of the resin to be produced, preferred are manganese, magnesium or titanium compounds as the catalyst.

After having been thus esterified or interesterified, the resulting prepolymer, to which are optionally added additives including a polycondensation catalyst, a coloration inhibitor and others, is then polycondensed in melt under a reduced pressure of at most 5 mmHg, at a temperature falling between 200 and 300°C, into a polyester having a desired viscosity. As the reactor for the melt polycondensation, employable are any of vertical batchwise polycondensation devices and continuous polycondensation devices comprising a horizontal, double-screw rotary reactor.

It is desirable that the polyester as obtained through the melt polycondensation has an intrinsic viscosity of from 0.40 to 0.90 dl/g, more preferably from 0.45 to 0.80 dl/g, in view of the easiness in handling the polyester. If the polyester as obtained through the melt polycondensation has an intrinsic viscosity of lower than 0.40 dl/g, its melt viscosity is too low when the polyester is taken out of the reactor. As a result, it is often difficult to extrude the polyester in the form of strands or sheets, and in addition, it is also often difficult to pelletize the polyester into uniform pellets. Moreover, a long period of time will be taken for increasing the molecular weight of the polyester, and this means the reduction in the producibility of the intended polyester. On the other hand, if the intrinsic viscosity of the polyester is higher than 0.90 dl/g, the melt viscosity thereof is too high. As a result, it is often difficult to take out the polyester from the reactor, and, in addition, the polyester will be thermally deteriorated and unfavorably colored.

Where a polycondensation catalyst is used for the melt polycondensation, it may be any and every one that is generally used in ordinary polyester production. For example, it includes antimony compounds such as antimony trioxide; germanium compounds such as germanium dioxide, germanium tetraethoxide and germanium tetra-n-butoxide; titanium compounds such as tetramethoxytitanium, tetraethoxytitanium, tetra-n-propoxytitanium, tetraisopropoxytitanium and tetrabutoxytitanium; and tin compounds such as di-n-butyltin dilaurate, di-n-butyltin oxide and dibutyltin diacetate.

These catalyst compounds may be used either singly or as combined. Of those polymerization catalysts, preferred are germanium compounds, since the polyester to be produced could have good color tone. In view of their cost, however, preferred are antimony compounds. Of the germanium compounds, especially preferred is germanium dioxide; and of the antimony compounds, especially preferred is antimony trioxide. The amount of the polycondensation catalyst, if used, is preferably from 0.002 to 0.8 % by weight relative to the weight of the dicarboxylic acid component.

In view of the moldability of the polyester to be produced, germanium compounds are preferred to antimony compounds. This is because, since the crystallization rate of the polyester as produced through polymerization using an antimony compound is generally higher than that as produced through polymerization using a germanium compound, the former polyester will crystallize more rapidly than the latter one when it is heated for injection molding or blow molding. As a result, the stretch orientation of the moldings of the former polyester is degraded and the shapability thereof is worsened. Specifically, bottles of the moldings will be whitened. After all, the range of the molding conditions for obtaining good moldings from the polyester is narrowed, and the percentage of failed moldings from it will increase.

Therefore, for polyethylene terephthalate not containing any comonomer component except the by-product of diethylene glycol, selecting a specific catalyst is important, since the crystallization rate of the polyethylene terephthalate of that type is higher than that of other polyethylene terephthalates as modified with a small amount of any other comonomer component. For the polyethylene terephthalate of that type, therefore, germanium compounds are preferably used as the catalyst.

Where a coloration inhibitor is used in the polycondensation, it may be a phosphorus compound, including, for example, phosphorous acid, phosphoric acid, trimethyl phosphite, triphenyl phosphite, tridecyl phosphite, trimethyl phosphate, tridecyl phosphate and triphenyl phosphate. The phosphorus compounds may be used either singly or as combined. Where a coloration inhibitor of any of the phosphorus compounds noted above is used, its amount is preferably from 0.001 to 0.5 % by weight relative to the weight of the dicarboxylic acid component.

In order to prevent the polyester from being pyrolyzed and yellowed, a cobalt compound such as cobalt acetate or the like may be added thereto in an amount of from 0.001 to 0.5 % by weight, preferably from 0.05 to 0.3 % by weight, relative to the weight of the dicarboxylic acid component.

In the process of producing the polyester, diethylene glycol is formed as a by-product. However, if the polyester contains a large amount of diethylene glycol units, its glass transition point will lower whereby its heat resistance is lowered and the polyester is colored. As a result, the heat resistance, the mechanical strength and the color tone of moldings to be produced from the polyester will be degraded. In order to evade these problems, it is desirable to effect the esterification, the interesterification and/or the melt polycondensation in the presence of a diethylene glycol production retardant, in an amount of from 0.001 to 0.5 % by weight relative to the weight of the dicarboxylic acid component, which may be selected from tetraalkylammonium hydroxides such as tetraethylammonium hydroxide; and organic amines such as triethanolamine and triethylamine. Using the diethylene glycol production retardant could lower the proportion of diethylene glycol units that may be in the polyester resin.

The polyester thus obtained as a result of the melt polycondensation is extruded in the form of strands, sheets or the like, then cooled, and pelletized with a strand cutter, a sheet cutter or the like into pellets of various shapes, for example, columnar, oval columnar, spherical, disk-like or dice-like pellets. For cooling the polyester being taken out of the reactor, employable is any cooling method of, for example, a water cooling method in a water tank, a cooling method with a drum or an air cooling method.

It is desirable that the polyester thus obtained is crystallized by drying it under heat at a temperature falling between 120°C and 180°C, and then molded or subjected to the next solid-phase polymerization. Preferably, the quantity of heat for crystal fusion of the thus-crystallized polyester resin is at least 10 J/g, more preferably at least 20 J/g. If the quantity of heat for crystal fusion of the crystallized polyester resin is smaller than 10 J/g, the pellets of the resin will be glutinous and gel during the solid-phase polymerization or while they are dried prior to being molded.

If desired, the polyester produced in the manner mentioned above may be subjected to solid-phase polymerization so as to increase its degree of polymerization, prior to being used as the polyester resin in the invention. The solid-phase polymerization reduces the oligomers and acetaldehyde remaining in the resin, and the resulting resin is prevented from soiling the mold used for molding it. In addition, the taste, flavor and other properties of the contents of the containers comprising the thus solid-phase polymerized resin are prevented from being deteriorated. The solid-phase polymerization of the polyester is preferably effected in vacuum, or under reduced pressure, or in an inert gas such as nitrogen gas. In order to prevent the polyester pellets from gelling together during their solid-phase polymerization, it is also desirable that the pellets are moved all the time during their solid-phase polymerization, according to a rolling method or a gaseous fluidized-bed method. The solid-phase polymerization is effected preferably at a temperature falling between 180 and 270°C, more preferably between 190 and 240°C. Regarding the temperature for the solid-phase polymerization, it is desirable that the temperature falls within the defined range and is higher by at least 15°C, more preferably at least 20°C, than the melting point of the final polyester (this is the polyester as intended to be finally obtained for direct use in the invention). In view of the producibility and other factors, it is desirable that the solid-phase polymerization time falls generally between around 5 and 40 hours.

The resin composition for the layer b in the invention is a mixture of two ethylene-vinyl alcohol copolymers (b1, b2), and its dispersion morphology is such that the particles of the ethylene-vinyl alcohol copolymer (b2) are dispersed in the matrix of the ethylene-vinyl alcohol copolymer (b1). The resin composition gives at least two peaks for crystal fusion in its differential scanning calorimetry (DSC), and satisfies the following formulae (1) to (7):$\text{60/40 ≤ Wb1/Wb2 ≤ 90/10}$$\text{25 ≤ ETb1 ≤ 40}$$\text{99 ≤ SDb1}$$\text{35 ≤ ETb2 ≤ 48}$$\text{92 ≤ SDb2 ≤ 99}$$\text{8 ≤ ETb2 - ETb1 ≤ 23}$$\text{1 ≤ SDb1 - SDb2 ≤ 8}$ wherein;
Wb1 indicates the amount by weight of the ethylene-vinyl alcohol copolymer (b1) in the resin composition,
Wb2 indicates the amount by weight of the ethylene-vinyl alcohol copolymer (b2) in the resin composition,
ETb1 indicates the ethylene content (mol%) of the ethylene-vinyl alcohol copolymer (b1),
ETb2 indicates the ethylene content (mol%) of the ethylene-vinyl alcohol copolymer (b2),
SDb1 indicates the degree of saponification (%) of the ethylene vinyl alcohol copolymer (b1), and
SDb2 indicates the degree of saponification (%) of the ethylene vinyl alcohol copolymer (b2).

In the invention, it is important that the dispersion morphology of the resin composition for the layer b is such that the particles of the ethylene-vinyl alcohol copolymer (b2) are dispersed in the matrix of the ethylene-vinyl alcohol copolymer (b1).

Specifically, it is important that the particles of EVOH (b2) having a higher ethylene content and a lower degree of saponification are dispersed in EVOH (b1) having a lower ethylene content and a higher degree of saponification.

In the resin composition for the layer b, EVOH (b1) having good gas-barrier properties forms the matrix component, and the particles of EVOH (b2) not having good gas-barrier properties are dispersed in the matrix of EVOH (b1). In that condition, EVOH (b1) ensures its good gas-barrier properties. On the other hand, surprisingly, EVOH (b2) still acts to improve the impact delamination resistance of the layer b, even though it is dispersed in the matrix of EVOH (b1) in the form of particles.

However, in case where the difference in the ethylene content therebetween is too small, EVOH (b1) and EVOH (b2) could not be in phase separation when blended, and EVOH (b2) could not disperse in EVOH (b1) in the form of particles, contrary to the intention of the invention. In that case, reduction in the gas-barrier properties of the layer b of the resin composition is inevitable, and, in addition, the thermal stability of the melt of the resin composition is poor.

As will be described in detail hereinunder, the resin composition of EVOH (b1) and EVOH (b2) can realize the intended dispersion morphology by specifically defining the chemical constitution of EVOH (b1) and EVOH (b2), the blend ratio of the two, and the MI ratio of the two.

Preferably, the particles of EVOH (b2) dispersed in the matrix of EVOH (b1) in the resin composition have a mean particle size of at most 0.8 µm.

If the mean particle size of the particles of EVOH (b2) dispersed in EVOH (b1) is larger than 0.8 µm, the gas-barrier properties of the layer b will be poor, or the impact delamination resistance thereof will be poor. The mean particle size of the particles of EVOH (b2) is more preferably at most 0.5 µm, even more preferably at most 0.3 µm.

The intended mean particle size of the particles EVOH (b2) can be realized by specifically controlling the blend ratio of EVOH (b1) and EVOH (b2) and the MI ratio of the two.

The dispersion morphology of the resin composition of EVOH (b1) and EVOH (b2) can be analyzed by observing the melt of a sheet of the resin composition with a thermal optical microscope, for example, in the manner mentioned hereinunder. According to the method, it is possible to analyze the interface between EVOH (b1) and EVOH (b2) that differ delicately in their constitution. For some samples of the resin composition, it is also possible to analyze the interface between the two resins through transmission electronic microscopy (TEM) of their sheets.

In the invention, it is also important that the resin composition for the layer b gives at least two peaks for crystal fusion in its differential scanning calorimetry (DSC). This indicates that EVOH (b1) and EVOH (b2) in the resin composition are in phase separation, and therefore separately give the respective peaks for crystal fusion in DSC. This further indicates that the two resins differ in some degree in the melting point.

As the layer b is formed from the resin composition that gives at least two DSC peaks for crystal fusion, it ensures improved impact delamination resistance not interfering with the gas-barrier properties and the thermal stability of itself.

In the resin composition for the layer b, it is indispensable that the blend ratio by weight of EVOH (b1) to EVOH (b2), Wb1/Wb2 falls between 60/40 and 90/10. Within the defined range, EVOH (b1) and EVOH (b2) can ensure the intended dispersion morphology, and the resin composition comprising them ensures improved impact delamination resistance not interfering with the gas-barrier properties and the thermal stability of itself.

If Wb1/Wb2 is smaller than 60/40, the layer b could not have good gas-barrier properties. On the other hand, if Wb1/Wb2 is larger than 90/10, the impact delamination resistance of the layer b is poor. Preferably, Wb1/Wb2 is at least 70/30, but at most 85/15.

The ethylene content ETb1 of EVOH (b1) falls between 25 and 40 mol%. If the ethylene content ETb1 is smaller than 25 mol%, the resin composition could not ensure good gas-barrier properties at high humidity, and its melt moldability is poor. Preferably, ETb1 is at least 28 mol%, more preferably at least 30 mol%. If the ethylene content ETb1 is larger than 40 mol%, the resin composition could not ensure good gas-barrier properties. Preferably, ETb1 is at most 38 mol%, more preferably at most 35 mol%, even more preferably at most 33 mol%.

The degree of saponification, SDb1, of the vinyl ester moiety of EVOH (b1) is at least 99 %, preferably at least 99.3 %, more preferably at least 99.5 %. If the degree of saponification SDb1 is smaller than 99 mol %, the resin composition could not ensure good gas-barrier properties especially at high humidity.

The ethylene content ETb2 of EVOH (b2) falls between 35 and 48 mol%. If the ethylene content ETb2 is smaller than 35 mol%, the resin composition could not ensure good impact delamination resistance. Preferably, ETb2 is at least 37 mol%, more preferably at least 40 mol%. If the ethylene content ETb2 is larger than 48 mol%, the resin composition could not ensure good gas-barrier properties. Preferably, ETb2 is at most 45 mol%.

The degree of saponification, SDb2, of the vinyl ester moiety of EVOH (b2) is at least 92 %, preferably at least 94 %, more preferably at least 96 %. If the degree of saponification SDb2 is smaller than 92 mol %, the resin composition could not ensure good gas-barrier properties at high humidity. If so, in addition, the thermal stability of the resin composition is low and the moldings will have fish eyes. The degree of saponification SDb2 is at most 99%, preferably at most 98 %, more preferably at most 97.5 %. If SDb2 is larger than 99 %, the impact delamination resistance of the resin composition is not good.

In the resin composition for the layer b in the invention, the ethylene content ETb1 of EVOH (b1) and the ethylene content ETb2 of EVOH (b2) satisfy the following formula (6):$\text{8 ≤ ETb2 - ETb1 ≤ 23}$

Accordingly, it is important that the ethylene content of EVOH (b2) is larger than that of EVOH (b1), and that the difference in the ethylene content between the two resins falls between 8 and 23 mol%.

If the ethylene content difference is larger than 23 mol%, the transparency of the container is low. On the other hand, if the ethylene content difference is smaller than 4 mol%, the impact delamination resistance of the layer b is poor. Preferably, the uppermost limit of the ethylene content difference is at most 20 mol%, more preferably at most 18 mol%, even more preferably at most 16 mol%. Also preferably, the lowermost limit of the ethylene content difference is at least 10 mol%.

In the resin composition for the layer b in the invention, the degree of saponification SDb1 of EVOH (b1) and the degree of saponification SDb2 of EVOH (b2) satisfy the following formula (7):$\text{1 ≤ SDb1 - SDb2 ≤ 8}$

Accordingly, it is important that the degree of saponification of EVOH (b1) is larger than that of EVOH (b2), and that the difference in the degree of saponification between the two resins falls between 1 and 8 %.

If the difference in the degree of saponification between them is smaller than 1 %, the impact delamination resistance of the layer b is poor. On the other hand, if the difference in the degree of saponification between them is larger than 8 %, the resin composition could not ensure good gas-barrier properties at high humidity. If so, in addition, the thermal stability of the resin composition is poor, and the moldings will have fish eyes. Preferably, the uppermost limit of the difference in the saponification degree between the two resins is at most 5 %, more preferably at most 4 %. Also preferably, the lowermost limit of the difference is at least 1.5 %, more preferably at least 2 %.

It is desirable that the resin composition of the two ethylene-vinyl alcohol copolymers (b1, b2) for the layer b in the invention has a mean ethylene content (this is derived from the blend ratio of b1 and b2) falling between 28 and 44 mol%. If its mean ethylene content is smaller than 28 mol%, the resin composition will have poor gas-barrier properties at high humidity, and, in addition, its melt moldability will be poor. More preferably, the mean ethylene content of the resin composition is at least 30 mol%, even more preferably at least 32 mol%. If, however, its mean ethylene content is larger than 44 mol%, the resin composition could not have good gas-barrier properties. More preferably, the mean ethylene content of the resin composition is at most 42 mol%, even more preferably at most 40 mol%.

It is also desirable that the resin composition has a mean degree of saponification (this is derived from the blend ratio of the two resins, b1 and b2) of at least 94 %, more preferably at least 96 %, even more preferably at least 97 %, still more preferably at least 98 %. If its mean degree of saponification is smaller than 94 %, the resin composition will have poor gas-barrier properties at high humidity. If so, in addition, the thermal stability of the resin composition will be poor, and the moldings will have fish eyes.

The ethylene content and the degree of saponification of EVOHs can be obtained through nuclear magnetic resonance (NMR).

In case where the EVOH resin composition for use herein is a mixture of three or more EVOHs, any two of all EVOHs constituting it shall satisfy the above-mentioned formulae (1) to (7).

The melt index (MIb1, MIb2, measured at 190°C under a load of 2160 g according to JIS K7210) of EVOH (b1) and EVOH (b2) that constitute the resin composition for the layer b in the invention preferably falls between 0.1 and 15 g/10 min. With their melt index falling within the defined range, the two EVOHs have good melt moldability and good high-speed long-run workability not giving fish eyes, and their multi-layered containers have good appearance. When they are combined with thermoplastic polyester and formed into multi-layered containers, the impact delamination resistance between the thermoplastic polyester layer (layer a) and the EVOH mixture layer (layer b) is good.

More preferably, the lowermost limit of MIb1 and MIb2 is at least at least 0.5 g/10 min, and the uppermost limit thereof is at most 10 g/10 min, even more preferably at most 8 g/10 min.

For the same reason as above, the melt index MIb of the resin mixture of EVOH (b1) and EVOH (b2) preferably falls between 0.1 and 10 g/10 min. More preferably, the lowermost limit of MIb is at least 0.5 g/10 min, and the uppermost limit thereof is at most 8 g/10 min, even more preferably at most 6 g/10 min.

Also preferably, the ratio of the melt index MIb1 of EVOH (b1) to the melt index MIb2 of EVOH (b2) satisfies the following formula (8), as ensuring finer dispersion of b2 in b1:$\text{0.1 ≤ MIb1/MIb2 ≤ 10}$

More preferably, the ratio MIb1/MIb2 is at least 0.3, even more preferably at least 0.5. Also more preferably, the ratio is at most 7, even more preferably at most 5.

EVOHs for use in the invention can be obtained by saponifying ethylene-vinyl ester copolymers in the presence of alkali catalysts, etc.

One typical example of the vinyl esters is vinyl acetate, but any other vinyl esters of fatty acids (e.g., vinyl propionate, vinyl pivalate) are also employable herein.

EVOH for use in the invention may be copolymerized with a small amount of any other comonomers within the range not interfering with the object of the invention. Examples of the comonomers employable herein include a-olefins such as propylene, 1-butene, isobutene, 4-methyl-1-pentene, 1-hexene and 1-octene. unsaturated carboxylic acids such as itaconic acid, methacrylic acid, acrylic acid and maleic anhydride, their salts, partial or complete esters, nitriles, amides and anhydrides; vinylsilane compounds such as vinyltrimethoxysilane; unsaturated sulfonic acids and their salts; alkylthiols and vinylpyrrolidones.

In particular, EVOH as copolymerized with from 0.0002 to 0.2 mol% of a vinylsilane compound is preferred, as its compatibility with a coinjecting substrate resin with respect to the melt viscosity is improved, thereby enabling to obtain homogeneous coinjection moldings. The vinylsilane compound includes, for example, vinyltrimethoxysilane, vinyltriethoxysilane, vinyltri (β-methoxy-ethoxy)silane and γ-methacryloxypropylmethoxysilane. Of those, preferred are vinyltrimethoxysilane and vinyltriethoxysilane.

For obtaining homogeneous coinjection moldings, the amount of the comonomer, vinylsilane compound to be copolymerized with EVOH is preferably between 0.001 and 0.15 mol%, more preferably between 0.005 and 0.1 mol%.

EVOH containing a boron compound also has good melt viscosity, and has the advantage of giving homogeneous coinjection moldings. The boron compound includes, for example, boric acids, borates, salts of boric acids and boron hydrides. Concretely, the boric acids include orthoboric acid (this will be referred to as boric acid), metaboric acid and tetraboric acid; the borates include triethyl borateand trimethyl borate; the salts of boric acids include alkali metal salts and alkaline earth metal salts of various boric acids such as those mentioned above, as well as borax. Of those compounds, preferred is orthoboric acid.

The boron compound content of EVOH for use herein may fall between 20 and 2,000 ppm, but preferably between 50 and 1,000 ppm, more preferably between 100 and 500 ppm, in terms of the boron element. Containing the boron compound within the defined range, EVOH could be prevented from suffering from torque variation while it is in melt under heat. However, if the boron compound content is smaller than 20 ppm, the effect of the boron compound added will be poor. If, on the other hand, the boron compound content is larger than 2,000 ppm, EVOH will easily gel and could not be molded well.

Also preferably, EVOH for use in the invention may contain an alkali metal salt in an amount of from 5 to 5,000 ppm in terms of the alkali metal element. The alkali metal salt added is effective for improving the interlayer adhesiveness of EVOH and for improving the compatibility thereof.

More preferably, the amount of the alkali metal salt to be added falls between 20 and 1,000 ppm, even more preferably between 30 and 500 ppm, in terms of the alkali metal element. The alkali metal includes, for example, lithium sodium and potassium, and the alkali metal salt may be any of salts with monovalent metals of aliphatic carboxylic acids, aromatic carboxylic acids, phosphoric acids and metal complexes. For example, the salt includes sodium acetate, potassium acetate, sodium phosphate, lithium phosphate, sodium stearate, potassium stearate and sodium ethylenediaminetetraacetate.
Of those, preferred are sodium acetate, potassium acetate and sodium phosphate.

Still preferably, EVOH for use in the invention may contain a phosphorus compound in an amount of from 2 to 200 ppm, more preferably from 3 to 150 ppm, even more preferably in an amount of from 5 to 100 ppm, in terms of the phosphorus element. If the phosphorus content of EVOH is smaller than 2 ppm, or larger than 200 ppm, the melt moldability and the thermal stability of EVOH will become poor. In particular, when melt molding of EVOH takes a long period of time, there will occur some problems with the resulting moldings in that gelled fish eyes are formed in the moldings and the moldings may be unfavorably colored.

The type of the phosphorus compound to be added to EVOH is not specifically defined. For example, employable are various acids such as phosphoric acid, phosphorous acid and others, and even their salts. Phosphates, if used, may be in EVOH in any form of primary phosphates, secondary phosphates and tertiary phosphates, and the type of cations for them is not also specifically defined. However, the salts are preferably alkali metal salts and alkaline earth metal salts. Especially preferably, the phosphorus compound is added to EVOH in the form of sodium dihydrogenphosphate, potassium dihydrogenphosphate, disodium hydrogenphosphate, or dipotassium hydrogenphosphate.

Within the range not interfering with the object of the invention, any of thermal stabilizers, UV absorbents, antioxidants, colorants, fillers and other resins (e.g. polyamides or polyolefins) may be blended with the EVOH resin for use in the invention.

One method for producing the multi-layered container of the invention is described below.

A multi-layered container precursor (preform) is formed generally in a molding machine equipped with two injection cylinders. In the molding machine of that type, the single mold is once clamped, and thereafter a molten PES resin and a molten EVOH resin composition are coinjected thereinto from the separate injection cylinders for the two not synchronized for their injection timing, both through alternate and/or concentric nozzles. The coinjection in that manner gives the intended multi-layered preform. Concretely, for example, (1) PES for the inner and outer layers is first injected, and then an EVOH resin composition for the interlayer is injected to give a three-layered container preform of PES/EVOH/PES; or (2) PES for the inner and outer layers is first injected, then an EVOH resin composition is injected while, at the same time or after the EVOH injection, PES to be the core layer is again injected to give a five-layered container preform of PES/EVOH/PES/EVOH/PES. Anyhow, for producing the preforms of the invention, employable are any ordinary methods for producing ordinary bottomed preforms in which the interlayer is completely sealed with the inner and outer PES layers. Therefore, the preform production in the invention does not require any special equipment.

Regarding the condition for injection molding to give the bottomed preforms, it is desirable that PES is injected at a temperature falling between 250°C and 330°C, more preferably between 270°C and 320°C, even more preferably between 280°C and 310°C. If the injection temperature for PES is lower than 250°C, the PES pellets could not be well melted and the resulting moldings will have fish eyes of the non-molten PES pellets, by which their appearance is worsened. In addition, the non-molten PES pellets existing in the moldings will lower the mechanical strength of the moldings. In some extreme cases, the screw torque for the PES injection will much increase whereby the molding machine will have operation trouble. On the other hand, however, if the injection temperature for PES is higher than 330°C, PES will be much degraded to have a lowered molecular weight, whereby the mechanical strength of the resulting moldings will be lowered. In addition, the PES degradation at such high temperatures gives some vapors of e.g. acetaldehyde, by which the properties of the contents to be filled in the molded containers will be worsened. Moreover, the oligomers resulting from the PES degradation will greatly soil the mold, and the moldings as molded in the mold thus soiled with such oligomers will have bad appearance.

For the EVOH resin composition, it is desirable that it is injected at a temperature falling between 170°C and 250°C, more preferably between 180°C and 240°C, even more preferably between 190°C and 230°C. If the injection temperature for the EVOH resin composition is lower than 170°C, pellets of the EVOH resin composition could not be well melted and the resulting moldings will have fish eyes of the non-molten EVOH pellets, by which their appearance is worsened. In some extreme cases, the screw torque for the EVOH injection will much increase whereby the molding machine will have operation trouble. On the other hand, however, if the EVOH injection temperature is higher than 250°C, the EVOH resin composition will be much degraded or gelled, whereby the appearance of the resulting moldings will be poor and the moldings will be yellowed. In addition, the EVOH flow being injected will be disordered by the vapors formed through the EVOH degradation and by the EVOH gels, whereby the EVOH resin composition layer formed will have failed parts and the gas-barrier properties of the layer will be lowered. In some extreme case, the EVOH gels will make it impossible to continue the injection molding operation.

It is desirable that the temperature of the hot runner parts through which PES and an EVOH resin composition run to be injected into the mold falls between 220°C and 300°C, more preferably between 240°C and 280°C, even more preferably between 250°C and 270°C. If the temperature of the hot runner parts is lower than 220°C, PES will crystallize and solidify in the parts. If so, the molding operation will become difficult. On the other hand, however, if the temperature of the hot runner parts is higher than 300°C, EVOH will be much degraded or gelled, whereby the appearance of the resulting moldings will be poor and the moldings will be yellowed. In addition, the EVOH flow being injected will be disordered by the vapors formed through the EVOH degradation and by the EVOH gels, whereby the EVOH resin composition layer formed will have failed parts and the gas-barrier properties of the layer will be lowered. In some extreme case, the EVOH gels will make it impossible to continue the injection molding operation.

In order to ensure good delamination resistance of the multi-layered containers to be obtained from the bottomed preforms through stretch blowing, it is important that the crystallization of PES and EVOH is minimized as much as possible in the injection molding stage for preparing the preforms. In that condition, the preforms could be uniformly stretched into good containers having good delamination resistance, high transparency and good shape retentivity. To retard the crystallization of PES and EVOH in the preforms, it is desirable that the mold temperature is conditioned to fall between 0°C and 70°C, more preferably between 5°C and 50°C, even more preferably between 10°C and 30°C. If the mold temperature is lower than 0°C, the dew formed around the mold will worsen the appearance of the preforms, from which good moldings could not be obtained. On the other hand, if the mold temperature is higher than 70°C, the crystallization of PES and EVOH in the preforms will be promoted. As a result, the preforms could not be uniformly stretched, and the delamination resistance of the moldings to be obtained from them through stretch blow molding will be low. In addition, it is difficult to obtain moldings of the intended shape. Moreover, the PES crystallization will lower the transparency of the moldings.

Regarding the thickness of the preform, its total thickness is preferably between 2 and 5 mm, and the thickness of the EVOH resin composition layers is preferably between 10 and 500 µm in total.

The thus-prepared, multi-layered preform is directly while hot, or after having been re-heated at 75 to 150°C with a heating means such as a block heater, an IR heater or the like, transferred into the next stretch-blowing step, in which it is stretched one- to five-fold in the machine direction, and thereafter blown one- to four-fold with compressed air into a multi-layered, stretch-blown polyester container with the PES resin layer and the EVOH resin composition layer being monoaxially or biaxially oriented.

In this step, if the temperature at which the multi-layered preform is heated is too high, the polyester will easily crystallize whereby the stretch-blown container is whitened and its appearance becomes poor. If so, in addition, the delamination of the stretch-blown container will increase unfavorably. On the other hand, if the temperature at which the multi-layered preform is heated is too low, the polyester will be crazed to be pearly whereby the transparency of the resulting stretch-blown container will be lowered. For these reasons, the temperature of the multi-layered preform being heated preferably falls between 85°C and 140°C, more preferably between 90°C and 130°C, even more preferably between 95°C and 120°C.

The total thickness of the body part of the multi-layered container of the invention generally falls between 100 µm and 3 mm, and may vary depending on the use of the container. In that part of the container, the total thickness of the EVOH resin composition layers is preferably between 2 and 200 µm, more preferably between 5 and 100 µm.

It is desirable that the intrinsic viscosity IVa of the polyester resin for the layer a of the multi-layered container of the invention falls between 0.60 and 0.90 dl/g, in view of the mechanical strength, the appearance and even the producibility of the moldings. If the intrinsic viscosity IVa is smaller than 0.60 dl/g, the mechanical strength of the moldings will be low and, in addition, the polyester resin will much crystallize while heated in the step of preform molding or in the subsequent step of blow molding. As a result, the stretch orientation of the moldings will be degraded or the preform will fail to be well stretched, and, after all, the transparency of bottles of the moldings will be low. More preferably, IVa is at least 0.65 dl/g, even more preferably at least 0.70 dl/g. On the other hand, however, if the intrinsic viscosity IVa is higher than 0.90 dl/g, the melt viscosity of the polyester resin will be too high and the resin could not be molded through injection into preforms. In addition, while the preforms are stretch-blown, the resin therein will be unevenly stretched to significantly worsen the appearance of the resulting moldings. Anyhow, the polyester resin of which the intrinsic viscosity IVa falls outside the defined range causes such various molding failures. More preferably, IVa is at most 0.85 dl/g.

The intrinsic viscosity IVa noted above is of the polyester that forms the layer a of the multi-layered container of the invention. Therefore, in consideration of the fact that the intrinsic viscosity of the polyester having been formed into the layer a through melt molding shall lower in some degree, it is desirable that the intrinsic viscosity of the starting polyester chips for the layer a is larger than the defined range in some degree.

The terminal carboxyl concentration Ca of the polyester resin for the layer a of the multi-layered container of the invention is desirably at most 40 microequivalents/g in order that the polyester resin itself could have good melt stability and good yellowing resistance and that the surfaces of the extruded moldings comprising the resin could be well prevented from being roughened. More desirably, Ca is at most 30 microequivalents/g. If its terminal carboxyl concentration Ca is larger than 40 microequivalents/g, the polyester resin will have poor thermal stability, when melted, and will be much degraded to have a greatly lowered molecular weight. If so, in addition, the moldings comprising the resin will be greatly yellowed.

The terminal carboxyl concentration Ca noted above is of the polyester that forms the layer a of the multi-layered container of the invention. Therefore, in consideration of the fact that the terminal carboxyl concentration of the polyester having been formed into the layer a through melt molding shall increase in some degree, it is desirable that the terminal carboxyl concentration of the starting polyester chips for the layer a is smaller than the defined range in some degree.

It is desirable that the oligomer (ethylene terephthalate cyclic trimer) content CTa of the polyester resin for the layer a of the multi-layered container of the invention is at most 2 % by weight. When the polyester resin having such a low oligomer content is molded, few oligomers will adhere to the mold to soil it, by which, therefore, the appearance of the moldings comprising the resin is degraded little. In addition, in that condition, the step of cleaning the mold and other parts of the molding machine used could be omitted, and the producibility of the moldings is high. For the purpose of well protecting the mold from being soiled by the oligomers, the oligomer content CTa is more preferably at most 1.5 % by weight, even more preferably at most 1.0 % by weight.

The oligomer content CTa noted above is of the polyester that forms the layer a of the multi-layered container of the invention. Therefore, in consideration of the fact that the oligomer content of the polyester having been formed into the layer a through melt molding shall increase in some degree, it is desirable that the oligomer content of the starting polyester chips for the layer a is smaller than the defined range in some degree.

It is desirable that the thermoplastic polyester layer constituting the body of the multi-layered container of the invention has a density Da (g/cm³) falling between 1.35 and 1.37. If the density Da of the thermoplastic polyester layer is smaller than 1.35 g/cm³, the layer will be stretched insufficiently and its mechanical strength will be low. If so, in addition, the layer will be greatly shrunk when the container comprising it is heated for hot filling or sterilization. More preferably, Da is at least 1.353 g/cm³, even more preferably at least 1.355 g/cm³. On the other hand, however, if Da is higher than 1.37 g/cm³, the delamination of the multi-layered container comprising the layer will increase. More preferably, Da is at most 1.367 g/cm³, even more preferably at most 1.365 g/cm³.

It is desirable that EVOH resin composition for the layer b of the multi-layered container of the invention has a density Db falling between 1.11 g/cm³ and 1.20 g/cm³. If its density Db is smaller than 1.11 g/cm³, the layer b could not have good gas-barrier properties. Preferably, Db is at least 1.12 g/cm³, more preferably at least 1.13 g/cm³. On the other hand, however, if the density Db is larger than 1.20 g/cm³, the delamination of the multi-layered container comprising the EVOH layer will increase. Preferably, Db is at most 1.19 g/cm³, more preferably at most 1.18 g/cm³.

It is desirable that the internal haze of the body of the multi-layered container of the invention, which is measured according to the method mentioned below, is at most 5 %. If the internal haze is larger than 5 %, the appearance of the multi-layered container will be poor. More preferably, the internal haze is at most 4 %, even more preferably at most 3 %.

The multi-layered containers comprising a polyester resin and a specific EVOH resin composition and produced in the manner mentioned hereinabove, especially those produced through coinjection stretch blow molding are, when shocked, prevented from being delaminated, even though they do not have an adhesive resin layer, and, in addition, they have good transparency and good gas-barrier properties.

The containers are suitable for preserving various materials therein in good condition for a long period of time, and are especially useful as those for various beverages such as carbonated beverages, beer, wine and others, and also for various edibles or cosmetics. In particular, molded containers for carbonated beverages are required to have high carbon dioxide gas-barrier properties. However, ordinary multi-layered PET bottles not having an adhesive resin layer are often delaminated owing to the pressure difference between the inside of the bottles and the outside thereof. Contrary to these, the multi-layered containers of the invention have extremely excellent gas-barrier properties and are hardly delaminated between the thermoplastic polyester layer (layer a) and the ethylene-vinyl alcohol copolymer layer (layer b), and therefore, they are favorable for carbonated beverages. The carbonated beverages to be filled in the molded containers of the invention are not specifically defined. Preferably, the lowermost limit of the carbon dioxide gas pressure of the carbonated beverages suitable to the containers of the invention is at least 1 kg/m², more preferably at least 1.5 kg/m², even more preferably at least 2 kg/m². Carbonated beverages having such a high carbon dioxide gas pressure can be safely packed and stored in the containers of the invention for a predetermined storage period of time required by the market, with no trouble of carbon dioxide gas leakage from the containers. To that effect, the present invention is of great significance. For ensuring good flavors of the carbonated beverages packed in the containers and for ensuring safe stability of the packed containers during their storage and transportation, the uppermost limit of the carbon dioxide gas pressure of the carbonated beverages to be packed in the containers of the invention is preferably at most 5 kg/m², more preferably at most 4.5 kg/m², even more preferably at most 4 kg/m².

Also preferably, the multi-layered containers of the invention have a capacity of at most 800 ml. PET bottles for beverages are being in great demand these days. In addition to large PET bottles having a capacity of 1 liter or more, small PET bottles having a capacity of 500 ml or less will be much used, as they are easy to handle in using them or in distributing or selling them, and as they are fashionable. Most conventional PET bottles have a large capacity of 1 liter or more, or even a larger capacity of 1.5 liters or more. Even though their gas-barrier properties are not so good, such large bottles will be acceptable for carbonated beverage storage therein, since their surface area is not so large relative to their capacity for the beverages to be packed therein. For example, when such large bottles contain carbonated beverages, they are effective for preventing carbon dioxide gas leakage from them for a desired period of time.

However, small bottles shall have an increased surface area relative to their capacity for the beverages to be packed therein. For ensuring safe storage of beverages therein, therefore, small bottles must have better gas-barrier properties than large bottles. This requirement is more significant for alcoholic drinks which are more readily oxidizable, such as beer and the like, and also for carbonated beverages which are required to keep the intended carbon dioxide gas content for a predetermined period of time. Since the multi-layered containers of the invention have extremely excellent gas-barrier properties, they are favorable to such small-sized drink or beverage applications. More preferably, the multi-layered containers of the invention have a capacity of at most 600 ml, even more preferably at most 400 ml. Even though having such a small capacity relative the surface area, the containers of the invention can surely and safely keep drinks and others therein, and to that effect, the invention is of great significance.

The invention is described in more detail with reference to the following Examples, which, however, are not intended to restrict the scope of the invention. In the following Examples, the samples were analyzed and evaluated according to the methods mentioned below.
(1) Constituent Unit Contents of Polyester:
   A polyester sample to be analyzed is subjected to ¹H-NMR (nuclear magnetic resonance) using JOEL's JNM-GX-500 Model, for which the solvent is trifluoroacetic acid deuteride, and the constituent unit contents of the polyester are obtained from the resulting ¹H-NMR spectral chart.
(2) Intrinsic Viscosity (IVa) of Polyester:
   A sample is taken out of the polyester layer of the body part of a multi-layered container to be analyzed, and its viscosity is measured in a 1/1 (by weight) mixture of solvents, phenol and tetrachloroethane, at 30°C, for which is used an Ubbelohde's viscometer (HRK-3 Model from Hayashi Seisakusho).
(3) Glass Transition Point (TGa) and Melting Point (TMa) of Polyester:
   A sample is taken out of the polyester layer of the body part of a multi-layered container to be analyzed, and its glass transition point (TGa) and melting point (TMa) are measured through differential scanning colorimetry (DSC) according to JIS K7121, for which is used a differential scanning colorimeter (DSC) of RDC220/SSC5200H Model (from Seiko Electronics Industry). Precisely, in the device, the sample is kept at 280°C for 5 minutes, then cooled to 30°C at a cooling rate of 100°C/min, kept at the temperature for 5 minutes, and then heated at a heating rate of 10°C/min. Through the heat cycle, TGa and TMa of the sample are obtained. For temperature calibration, used are indium and lead. The glass transition point as referred to herein indicates the midway glass transition point (Tmg) according to JIS K7121, and the melting point also referred to herein indicates the peak point in melting (Tpm) according to the same.
(4) Terminal Carboxyl Concentration (Ca) of Polyester:
   0.2 g of a polyester sample as taken out of the polyester layer of the body part of a multi-layered container to be analyzed is dissolved in 10 ml of benzyl alcohol heated at 215°C, to which is added 10 ml of chloroform. The resulting sample solution is titered with a solution of sodium hydroxide in benzyl alcohol.
(5) Oligomer (cyclic trimer) Content (CTa) of Polyester:
   100 mg of a polyester sample as taken out of the polyester layer of the body part of a multi-layered container to be analyzed is dissolved in 2 ml of chloroform/1,1,1,3,3,3-hexafluoro-2-propanol (1/1, by volume), and diluted with 8 ml of additional chloroform. Acetonitrile is added to this to make 100 ml in volume, by which the polymer component is re-precipitated. This is then filtered to obtain a filtrate. This filtrate is subjected to high-performance liquid chromatography (column: Chemco's ODS-II) using an eluent of an aqueous solution of 75 vol% acetonitrile, for quantitative analysis based on the UV and visible absorbance and the refractive index to obtain the ethylene terephthalate cyclic trimer content (wt.%) of the sample.
(6) Ethylene Content and Degree of Saponification of EVOH:
   The ethylene content and the degree of saponification of EVOH are obtained from the ¹H-NMR (nuclear magnetic resonance) spectral chart of EVOH in a solvent of dimethyl sulfoxide deuteride, for which is used JOEL's JNM-GX-500 Model.
(7) Melting Point of EVOHs (TMb1, TMb2):
   The melting point of each starting EVOH is measured through differential scanning colorimetry (DSC) according to JIS K7121, for which is used a differential scanning colorimeter (DSC) of RDC220/SSC5200H Model (from Seiko Electronics Industry). Precisely, in the device, the sample is kept at 240°C for 5 minutes, then cooled to 30°C at a cooling rate of 100°C/min, kept at the temperature for 5 minutes, and then heated at a heating rate of 10°C/min. Through the heat cycle, the melting point of the sample is obtained. For temperature calibration, used are indium and lead. The melting point referred to herein indicates the peak point in melting (Tpm) according to JIS K7121.
(8) DSC Analysis of EVOH Resin Composition:
   A sample is taken out of the EVOH resin composition layer of the body part of a multi-layered container to be analyzed, and its melting point is measured through differential scanning colorimetry (DSC) according to JIS K7121, for which is used a differential scanning colorimeter (DSC) of RDC220/SSC5200H Model (from Seiko Electronics Industry). Precisely, in the device, the sample is kept at 240°C for 5 minutes, then cooled to 30°C at a cooling rate of 100°C/min, kept at the temperature for 5 minutes, and then heated at a heating rate of 10°C/min. Through the heat cycle, the melting point of the sample is obtained. For temperature calibration, used are indium and lead.
   Of the samples thus analyzed, selected are those having at least two maximum or minimum values in the DSC crystal fusion profile. The thus-selected samples are within the scope of the resin composition that gives at least two peaks for crystal fusion in DSC.
(9) Melt Index (MIb, MIb1, MIb2) of EVOH and EVOH Resin Composition:
   This is measured, using a melt indexer, L244 (from Takara Industry). Concretely, EVOH chips are filled into a cylinder having an inner diameter of 9.55 mm and a length of 162 mm, melted therein at 190°C. To the resulting EVOH melt, uniformly applied is a load of a plunger having a weight of 2,160 g and a diameter of 9.48 mm, by which the EVOH is extruded out of the cylinder through the center orifice having a diameter of 2.1 mm, whereupon the flow rate (g/10 min) of the EVOH melt being extruded out is measured. This indicates the melt index MIb of the EVOH sample.
(10) Phosphate Radical Content of EVOH:
   The phosphate radical content of EVOH is measured in terms of the phosphate ion (PO₄³⁻) content thereof, according to the following method. Concretely, 10 g of a dry sample of EVOH is put into 50 ml of 0.01 N HCl, and stirred at 95°C for 6 hours. The resulting solution is quantitatively analyzed through ion chromatography to measure the phosphate ion content of the sample. As the column, used is CIS-A23 (from Yokogawa Electric), for which the eluent is an aqueous solution containing 2.5 mM sodium carbonate and 1.0 mM sodium hydrogencarbonate. The sample quantification is based on the calibration curve of aqueous solutions of phosphoric acid.
(11) Na, K, Mg Ion Contents of EVOH:
   10 g of dry chips of EVOH to be analyzed are put into 50 ml of 0.01 N HCl, and stirred at 95°C for 6 hours. The resulting solution is quantitatively analyzed through ion chromatography to measure the Na ion content, the K ion content and the Mg ion content of the sample. As the column, used is ICS-C25 (from Yokogawa Electric), for which the eluent is an aqueous solution containing 5.0 mM tartaric acid and 1.0 mM 2,6-pyridinedicarboxylic acid. The sample quantification is based on the calibration curve of aqueous solutions of sodium chloride, that of aqueous solutions of potassium chloride and that of aqueous solutions of magnesium chloride. From the thus-obtained Na ion, K ion and Mg ion contents, derived are the alkali metal salt content and the alkaline earth metal salt content of the sample both in terms of the metal.
(12) Dispersion morphology of the resin composition:
   From a sample of EVOH composition pellets to be analyzed, prepared are sheet pieces having a thickness of 10 µm or so, by the use of a microtome. One sheet piece is sandwiched between a slide glass and a cover glass, mounted on an optical microscope equipped with a hot stage, heated at 200°C for 3 minutes, and observed through the microscope.
   According to this method, it can be decided whether EVOH (b1) and EVOH (b2) are in phase separation or not.
(13) Mean Particle Size of EVOH (b2):
   From a sample of EVOH composition pellets to be analyzed, prepared are sheet pieces having a thickness of at most 100 nm, by the use of Leica's Reichert ULTRACUT-S equipped with a diamond knife. Optionally stained, the sheet pieces are imaged by the use of a TEM analyzer, Hitachi's H-800NA Model. On the image, the mean area per one particle in the sample is obtained. The diameter of the circle having the same area as the mean area thus obtained indicates the mean particle size of EVOH (b2) dispersed in the sample.
   For identifying EVOH (b1) and EVOH (b2) therein, the sample may not be stained in case where the density difference between the two EVOH resins constituting the sample is large. Even though not stained, the two resins can be well identified by the shade on the TEM image of the sample. Concretely, the EVOH resin b1 having a lower ethylene content and a higher degree of saponification has a higher density and therefore gives a thicker shade in the image, while the other EVOH resin b2 having a lower density gives a thinner shade therein.
   On the other hand, in case where the density difference between the two EVOH resins constituting the sample is small, the sample is stained to differentiate the resins b1 an b2 from each other. The method of staining the sample will vary, depending on the type of the sample. For example, the sample may be stained with osmium tetroxide. In the Examples described hereinunder, they are exposed to a vapor of osmium tetroxide for seven days under the room temperature. When exposed thereto, the resin b2 having a higher ethylene content and a lower degree of saponification absorbs a larger amount of osmium tetroxide, and therefore gives a thicker shade on the image.
(14) Frequency of Delamination of Multi-Layered Container:
   100 molded bottles each are filled with water and sealed with a stopper under normal pressure. Each bottle with its body being kept horizontally is spontaneously dropped from a height of 50 cm onto a triangular stand having a length of 20 cm and having an angle of 90° at its chip that faces the dropping bottle. The dropping test is effected only once, in which the 90° chip of the stand is targeted to the center of the body of the dropping bottle. From the number of the bottles delaminated in the test, the frequency of delamination is obtained according to the following formula:$\text{Frequency of Delamination (%)} \text{= [(number of delaminated bottles)/100] × 100.}$
(15) Haze Value of Multi-Layered Container:
   The body of a bottle sample to be analyzed is divided into four equal portions around the circumference at its center, and the internal haze of each of those four portions is measured with a Poic integrating-sphere light transmittance/complete light reflectance meter (HR-100 Model from Murakami Color Technology Laboratories) according to ASTM D1003-61. The data are averaged, and the resulting mean value indicates the haze value of the bottle.
(16) Oxygen Transmission Rate Through Multi-Layered Container:
   Bottle samples to be analyzed are conditioned at 20°C and 65 % RH for their outside and at 20°C and 100 % RH for their inside, and the oxygen transmission rate through each bottle, ml/bottle·day·atm, is measured with an oxygen transmission rate measuring device, OX-TRAN-10/50A (from Modern Control). During the measurement, all bottles are kept conditioned at 20°C and 65 % RH for their outside and at 20°C and 100 % RH for their inside.
(17) Carbon Dioxide Transmission Rate Through Multi-Layered Container:
   Bottle samples to be analyzed are conditioned at 20°C and 65 % RH for their outside and at 20°C and 100 % RH for their inside, and then filled with carbonated water to a degree of 4.0 gas volume (3.6 kg/cm²) at 20°C. In that condition the carbon dioxide transmission rate through each bottle, ml/bottle·day·atm, is measured with a carbon dioxide transmission rate measuring device, PERMATRAN C-IV Model (from Modern Control).
(18) Thermal Stability of EVOH Composition:
   A polyester resin and an EVOH composition to be tested are molded into a two-resin, three-layered preform of PES/EVOH/PES, through coinjection molding, for which is used a coinjection stretch blow molding machine (ASB-50HT Model from Nissei ASB). Concretely, the temperature of the PES injection zone is 290°C; the temperature of the EVOH injection zone is 230°C; and the temperature of the hot runner block in which the two resins, PES and EVOH are combined is 265°C. In the hot runner block, the two resins PES and EVOH are kept staying at the conditioned temperature for 30 minutes. Then, the combined resins are co-injected into a mold cavity. The temperature of the injection mold core is 15°C; and the temperature of the injection mold cavity is 15°C. The appearance of the thus-prepared preform is observed.

### Example 1:

The polyester resin used herein was prepared according to the method mentioned below.
(1) 100.000 parts by weight of terephthalic acid and 44.830 parts by weight of ethylene glycol were made into a slurry, to which were added 0.010 parts by weight of germanium dioxide, 0.010 parts by weight of phosphorous acid and 0.010 parts by weight of tetraethylammonium hydroxide. The resulting slurry was heated under pressure (absolute pressure of 2.5 kg/cm²) at 250°C for esterification to a degree of up to 95 %, thereby giving an oligomer. The resulting oligomer was subjected to melt polycondensation under a reduced pressure of 1 mmHg at a temperature of 270°C to obtain a polyester prepolymer having an intrinsic viscosity of 0.50 dl/g. The resulting polyester prepolymer was extruded through a nozzle into a strand, cooled with water, and pelletized into columnar pellets (diameter: about 2.5 mm, length: about 2.5 mm). The resulting pellets were pre-dried at 160°C for 5 hours and crystallized. Thus was obtained a crystallized polyester prepolymer.
(2) The constituent unit contents of the polyester prepolymer prepared in (1) were measured through NMR. The terephthalic acid unit content, the ethylene glycol unit content and the diethylene glycol (by-product) unit content of the polyester prepolymer were 50.0 mol%, 48.9 mol% and 1.1 mol%, respectively. The terminal carboxyl content and the melting point of the polyester prepolymer were measured according to the methods mentioned hereinabove, and were 38 microequivalents/g and 253°C, respectively.
   Next, the polyester prepolymer was pre-dried at 160°C for 5 hours and crystallized.
(3) The crystallized polyester prepolymer was subjected to solid-phase polymerization in a rolling-type, vacuum, solid-phase polymerization device, under a reduced pressure of 0.1 mmHg at 220°C for 10 hours, into a polyester resin having an increased molecular weight.
(4) The constituent unit contents of the polyester resin prepared in (3) were measured through NMR. The terephthalic acid unit content, the ethylene glycol unit content and the diethylene glycol unit content of the polyester resin were 50.0 mol%, 48.9 mol% and 1.1 mol%, respectively.

The intrinsic viscosity, the melting point, the glass transition point TGa, the terminal carboxyl content and the cyclic trimer content of the polyester resin were 0.83 dl/g, 252°C, 80°C, 22 microequivalents/g and 0.32 % by weight, respectively.

As the EVOH resin b1, used herein was EVOH having an ethylene content (ETb1) of 32 mol%, a degree of saponification (SDb1) of 99.7 %, a melt index (MIbl, at 190°C under a load of 2,160 g) of 4.0 g/10 min, and a melting point of 183°C. The phosphate radical content, the Na ion content, the K ion content and the Mg ion content of this EVOH were measured, and were 95 ppm, 15 ppm, 7 ppm and 4 ppm, respectively.

As the EVOH resin b2, used herein was EVOH having an ethylene content (ETb2) of 44 mol%, a degree of saponification (SDb2) of 96.5 %, a melt index (MIb2, at 190°C under a load of 2,160 g) of 5.1 g/10 min, and a melting point of 153°C. The phosphate radical content, the Na ion content, the K ion content and the Mg ion content of this EVOH were measured, and were 85 ppm, 70 ppm, 33 ppm and 25 ppm, respectively.

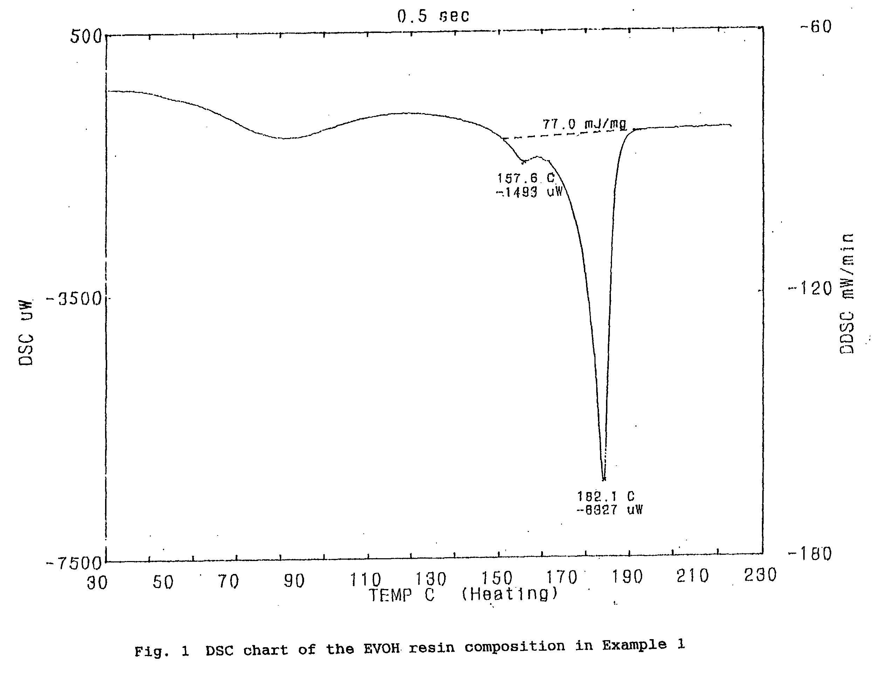

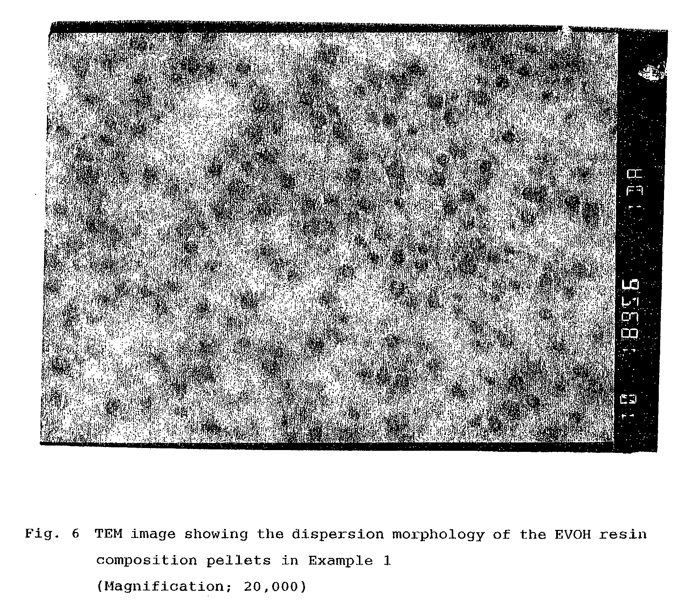

80 parts by weight of the EVOH resin b1, 20 parts by weight of the EVOH resin b2, and 0.016 parts by weight of hydrotalcite (DHT-4A from Kyowa Chemical Industry) were blended in dry, and the resulting blend was pelletized through a 20 mmφ double-screw extruder at 200°C, and dried at 80°C under reduced pressure for 16 hours. The thus-pelletized EVOH resin composition was used herein. Its melt index (MIb, at 190°C under a load of 2,160 g) was 4.5 g/10 min. Its phosphate radical content, Na ion content, K ion content and Mg ion content were measured, and were 93 ppm, 26 ppm, 12 ppm and 8 ppm, respectively. Its melting point appeared at 182°C and 158°C, and its differential scanning calorimetry (DSC) gave two peaks for crystal fusion (see Fig. 1). Having a mean particle size of about 0.2 µm, the particles of EVOH (b2) were dispersed in the matrix of EVOH resin (b1) (see Fig. 6).

From the polyester resin and the EVOH composition prepared in the manner as above, obtained was a two-resin, three-layered preform of PES/EVOH/PES, through coinjection molding, for which was used a coinjection stretch blow molding machine (ASB-50HT Model from Nissei ASB). Concretely, the temperature of the PES injection zone was 290°C; the temperature of the EVOH injection zone was 220°C; the temperature of the hot runner block in which the two resins, PES and EVOH are combined was 260°C; the temperature of the injection mold core was 15°C; the temperature of the injection mold cavity was 15°C; and the cycle time was 40 seconds.

Next, the resulting preform was heated at 105°C at its surface, and subjected to stretch blow molding into a two-resin, three-layered, coinjection stretch blow molded bottle having a capacity of 350 ml, for which was used a stretch blow-molding machine (Corpoplast's LB01). In the body part of the bottle, the inner layer of PES had a mean thickness of 150 µm, the interlayer of EVOH had a mean thickness of 15 µm, and the outer layer of PES had a mean thickness of 100 µm.

In the body part of the bottle, PES of the inner and outer layers was taken out, and the density Da, the intrinsic viscosity IVa, the melting point TMa, the glass transition temperature TGa, the terminal carboxyl content Ca and the cyclic trimer content CTa of the thus-taken out PES were measured. They were 1.369 g/cm³, 0.80 dl/g, 252°C, 79°C, 26 microequivalents/g, and 0.73 % by weight, respectively.

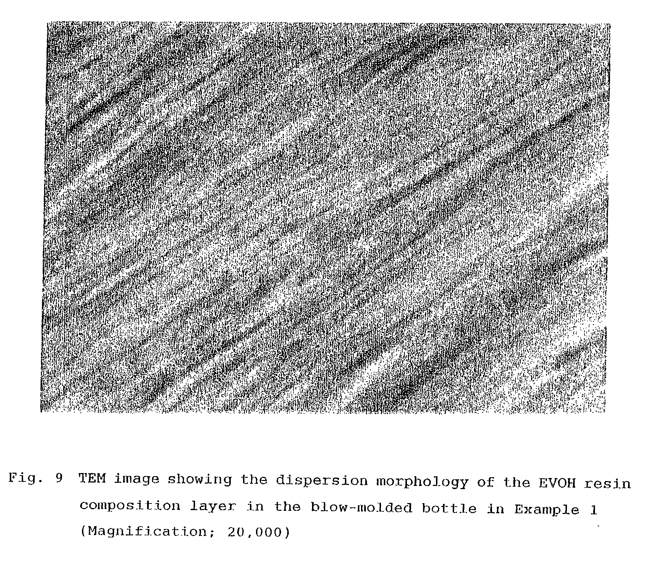

In the body part of the bottle, EVOH was taken out, and its melting point TMb and density Db were measured. Its melting point TMb appeared at 182°C and 158°C; and its density Db was 1.173 g/cm³. The condition of EVOH (b2) dispersed in the EVOH resin composition layer in the body part of the bottle was observed. It was found that the particles of EVOH (b2) were flattened (see Fig. 9).

The frequency of delamination of the bottles, the haze of the body part of the bottles, and the oxygen transmission rate and the carbon dioxide transmission rate through the bottles were measured, and they were 8 %, 3.8 %, 0.025 ml/bottle·day·atm, and 0.19 ml/bottle·day·atm, respectively.

The thermal stability of the EVOH composition used herein was confirmed as follows: The two resins, EVOH composition and PES prepared herein were molded into a two-resin, three-layered preform of PES/EVOH/PES, through coinjection molding, for which was used the same coinjection stretch blow molding machine as above. Concretely, the temperature of the PES injection zone was 290°C; the temperature of the EVOH injection zone was 230°C; and the temperature of the hot runner block in which the two resins, PES and EVOH are combined was 265° C. In the hot runner block, the two resins PES and EVOH were kept staying at the conditioned temperature for 30 minutes. Then, the combined resins were co-injected into a mold cavity. The temperature of the injection mold core was 15°C; and the temperature of the injection mold cavity was 15°C. The thus-prepared preform was yellowed only a little, but did not have fish eyes, and its appearance was good.

### Example 2:

A thermoplastic polyester resin was prepared in the same manner as in Example 1. The same EVOH resins b1 and b2 as in Example 1 were used to prepare an EVOH composition. Concretely, 70 parts by weight of the EVOH resin b1, 30 parts by weight of the EVOH resin b2, and 0.016 parts by weight of hydrotalcite (DHT-4A from Kyowa Chemical Industry) were blended in dry, and the resulting blend was pelletized through a 20 mmφ double-screw extruder at 200°C, and dried at 80°C under reduced pressure for 16 hours, in the same manner as in Example 1. The melt index (MIb, at 190°C under a load of 2,160 g) of the EVOH composition was 4.7 g/10 min. Its phosphate radical content, Na ion content, K ion content and Mg ion content were measured, and were 92 ppm, 32 ppm, 15 ppm and 10 ppm, respectively. Its melting point appeared at 182°C and 158°C, and its differential scanning calorimetry (DSC) gave two peaks for crystal fusion. Having a mean particle size of about 0.2 µm, the particles of EVOH (b2) were dispersed in the matrix of EVOH (b1).

From the polyester resin and the EVOH composition prepared in the manner as above, obtained was a two-resin, three-layered preform of PES/EVOH/PES through coinjection molding, like in Example 1.

Next, also like in Example 1, the resulting preform was heated, and subjected to stretch blow molding into a two-resin, three-layered, coinjection stretch blow molded bottle having a capacity of 350 ml. In the body part of the bottle, the inner layer of PES had a mean thickness of 150 µm, the interlayer of EVOH had a mean thickness of 15 µm, and the outer layer of PES had a mean thickness of 100 µm.

In the body part of the bottle, PES of the inner and outer layers was taken out, and the density Da, the intrinsic viscosity IVa, the melting point TMa, the glass transition temperature TGa, the terminal carboxyl content Ca and the cyclic trimer content CTa of the thus-taken out PES were measured. They were 1.369 g/cm³, 0.80 dl/g, 252°C, 79°C, 25 microequivalents/g, and 0.72 % by weight, respectively.

In the body part of the bottle, EVOH was taken out, and its melting point TMb and density Db were measured. Its melting point TMb appeared at 182°C and 158°C; and its density Db was 1.168 g/cm³.

The frequency of delamination of the bottles, the haze of the body part of the bottles, and the oxygen transmission rate and the carbon dioxide transmission rate through the bottles were measured, and they were 6 %, 4.0 %, 0.028 ml/bottle·day·atm, and 0.21 ml/bottle·day·atm, respectively.

Like in Example 1, the two resins, EVOH composition and PES prepared herein were molded into a two-resin, three-layered preform of PES/EVOH/PES, through coinjection molding, for which was used the same coinjection stretch blow molding machine as above. Concretely, the temperature of the PES injection zone was 290°C; the temperature of the EVOH injection zone was 230°C; and the temperature of the hot runner block in which the two resins, PES and EVOH are combined was 265° C. In the hot runner block, the two resins PES and EVOH were kept staying at the conditioned temperature for 30 minutes. Then, the combined resins were co-injected into a mold cavity. The temperature of the injection mold core was 15°C; and the temperature of the injection mold cavity was 15°C. The thus-prepared preform was yellowed only a little, but did not have fish eyes, and its appearance was good.

### Comparative Example 1:

A thermoplastic polyester resin was prepared in the same manner as in Example 1, and combined with an EVOH resin b1 (this is the same as in Example 1) only. From the two resins, obtained was a two-resin, three-layered preform of PES/EVOH/PES through coinjection molding, like in Example 1.

Next, also like in Example 1, the resulting preform was heated, and subjected to stretch blow molding into a two-resin, three-layered, coinjection stretch blow molded bottle having a capacity of 350 ml. In the body part of the bottle, the inner layer of PES had a mean thickness of 149 µm, the interlayer of EVOH had a mean thickness of 15 µm, and the outer layer of PES had a mean thickness of 101 µm.

In the body part of the bottle, PES of the inner and outer layers was taken out, and the density Da, the intrinsic viscosity IVa, the melting point TMa, the glass transition temperature TGa, the terminal carboxyl content Ca and the cyclic trimer content CTa of the thus-taken out PES were measured. They were 1.368 g/cm³, 0.79 dl/g, 252°C, 79°C, 26 microequivalents/g, and 0.74 % by weight, respectively.

In the body part of the bottle, EVOH was taken out, and its melting point TMb and density Db were measured. Its melting point TMb was 183°C; and its density Db was 1.184 g/cm³.

The frequency of delamination of the bottles, the haze of the body part of the bottles, and the oxygen transmission rate and the carbon dioxide transmission rate through the bottles were measured, and they were 98 %, 3.4 %, 0.027 ml/bottle·day·atm, and 0.20 ml/bottle·day·atm, respectively.

The thermal stability of EVOH used herein was confirmed. The two resins, EVOH and PES prepared herein were molded into a two-resin, three-layered preform of PES/EVOH/PES, through coinjection molding, for which was used the same coinjection stretch blow molding machine as above. Concretely, the temperature of the PES injection zone was 290°C; the temperature of the EVOH injection zone was 230°C; and the temperature of the hot runner block in which the two resins, PES and EVOH are combined was 265° C. In the hot runner block, the two resins PES and EVOH were kept staying at the conditioned temperature for 30 minutes. Then, the combined resins were co-injected into a mold cavity. The temperature of the injection mold core was 15°C; and the temperature of the injection mold cavity was 15°C. The thus-prepared preform was yellowed only a little, but did not have fish eyes, and its appearance was good.

### Comparative Example 2:

A thermoplastic polyester resin was prepared in the same manner as in Example 1. As the EVOH resin b1, herein used was the same one as in Example 1. As the EVOH resin b2, herein prepared was EVOH having an ethylene content (ETb2) of 32 mol%, a degree of saponification (SDb2) of 96.5 %, a melt index (MIb2, at 190°C under a load of 2,160 g) of 3.8 g/10 min, and a melting point of 172°C. The phosphate radical content, the Na ion content, the K ion content and the Mg ion content of this EVOH were measured, and were 83 ppm, 70 ppm, 35 ppm and 25 ppm, respectively.

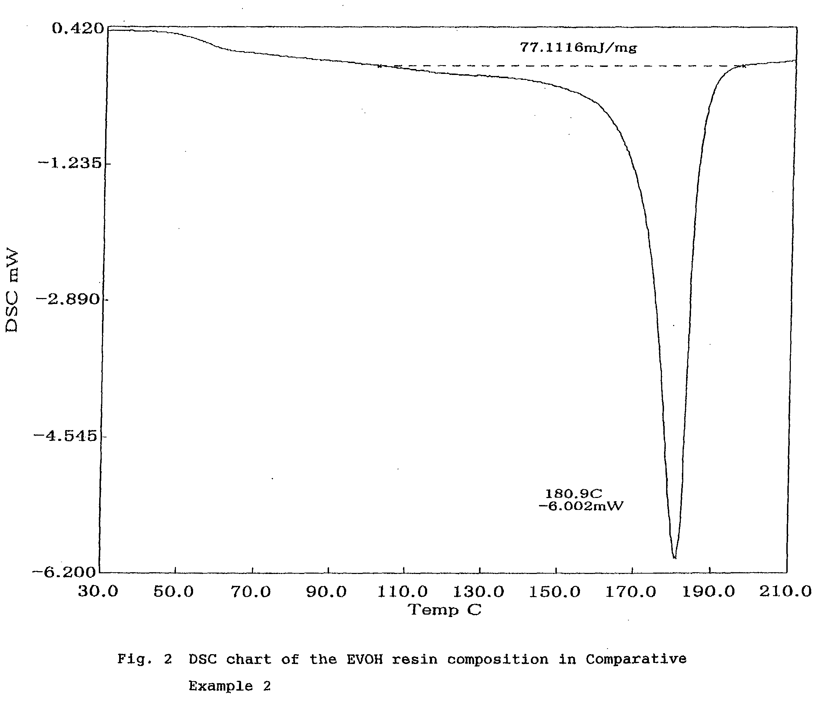

50 parts by weight of the EVOH resin b1, 50 parts by weight of the EVOH resin b2, and 0.016 parts by weight of hydrotalcite (DHT-4A from Kyowa Chemical Industry) were blended in dry, and the resulting blend was pelletized through a 20 mmφ double-screw extruder at 200°C, and dried at 80°C under reduced pressure for 16 hours, in the same manner as in Example 1. The melt index (MIb, at 190°C under a load of 2,160 g) of the EVOH composition was 3.8 g/10 min. Its phosphate radical content, Na ion content, K ion content and Mg ion content were measured, and were 89 ppm, 43 ppm, 21 ppm and 15 ppm, respectively. Its melting point was 181°C, and its differential scanning calorimetry (DSC) gave a single peak for crystal fusion (see Fig. 2). The phase morphology of the EVOH composition was analyzed. It was found that the two EVOH (b2) resins b1 and b2 completely dissolved and formed a single phase.

From the polyester resin and the EVOH composition prepared in the manner as above, obtained was a two-resin, three-layered preform of PES/EVOH/PES through coinjection molding, like in Example 1.

Next, also like in Example 1, the resulting preform was heated, and subjected to stretch blow molding into a two-resin, three-layered, coinjection stretch blow molded bottle having a capacity of 350 ml. In the body part of the bottle, the inner layer of PES had a mean thickness of 152 µm, the interlayer of EVOH had a mean thickness of 14 µm, and the outer layer of PES had a mean thickness of 99 µm.

In the body part of the bottle, PES of the inner and outer layers was taken out, and the density Da, the intrinsic viscosity IVa, the melting point TMa, the glass transition temperature TGa, the terminal carboxyl content Ca and the cyclic trimer content CTa of the thus-taken out PES were measured. They were 1.370 g/cm³, 0.80 dl/g, 252°C, 79°C, 27 microequivalents/g, and 0.73 % by weight, respectively.

In the body part of the bottle, EVOH was taken out, and its melting point TMb and density Db were measured. Its melting point TMb was 181°C; and its density Db was 1.179 g/cm³.

The frequency of delamination of the bottles, the haze of the body part of the bottles, and the oxygen transmission rate and the carbon dioxide transmission rate through the bottles were measured, and they were 7 %, 2.8 %, 0.051 ml/bottle·day·atm, and 0.37 ml/bottle·day·atm, respectively.

The thermal stability of EVOH used herein was confirmed in the same manner as in Example 1. The two resins, EVOH and PES prepared herein were molded into a two-resin, three-layered preform of PES/EVOH/PES, through coinjection molding, for which was used the same coinjection stretch blow molding machine as above. Concretely, the temperature of the PES injection zone was 290°C; the temperature of the EVOH injection zone was 230°C; and the temperature of the hot runner block in which the two resins, PES and EVOH are combined was 265° C. In the hot runner block, the two resins PES and EVOH were kept staying at the conditioned temperature for 30 minutes. Then, the combined resins were co-injected into a mold cavity. The temperature of the injection mold core was 15°C; and the temperature of the injection mold cavity was 15°C. The thus-prepared preform was browned, and its EVOH layer had fish eyes and streaks, and was not uniform in thickness.

### Comparative Example 3:

The same thermoplastic polyester resin as in Example 1, the same EVOH resin b1 as in Example 1, and the same EVOH resin b2 as in Comparative Example 2 were prepared.

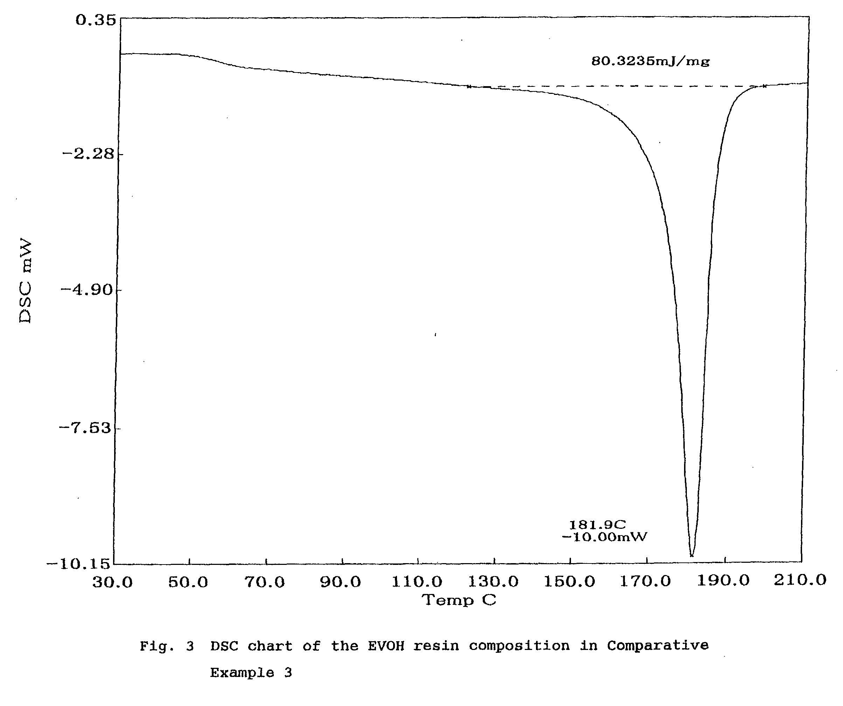

80 parts by weight of the EVOH resin b1, 20 parts by weight of the EVOH resin b2, and 0.016 parts by weight of hydrotalcite (DHT-4A from Kyowa Chemical Industry) were blended in dry, and the resulting blend was pelletized through a 20 mmφ double-screw extruder at 200°C, and dried at 80°C under reduced pressure for 16 hours, in the same manner as in Example 1. The melt index (MIb, at 190°C under a load of 2,160 g) of the EVOH composition was 3.9 g/10 min. Its phosphate radical content, Na ion content, K ion content and Mg ion content were measured, and were 93 ppm, 26 ppm, 13 ppm and 8 ppm, respectively. Its melting point was 182°C, and its differential scanning calorimetry (DSC) gave a single peak for crystal fusion (see Fig. 3). The phase morphology of the EVOH (b2) composition was analyzed. It was found that the two EVOH resins b1 and b2 completely dissolved and formed a single phase.

From the polyester resin and the EVOH composition prepared in the manner as above, obtained was a two-resin, three-layered preform of PES/EVOH/PES through coinjection molding, like in Example 1.

Next, also like in Example 1, the resulting preform was heated, and subjected to stretch blow molding into a two-resin, three-layered, coinjection stretch blow molded bottle having a capacity of 350 ml. In the body part of the bottle, the inner layer of PES had a mean thickness of 152 µm, the interlayer of EVOH had a mean thickness of 15 µm, and the outer layer of PES had a mean thickness of 100 µm.

In the body part of the bottle, PES of the inner and outer layers was taken out, and the density Da, the intrinsic viscosity IVa, the melting point TMa, the glass transition temperature TGa, the terminal carboxyl content Ca and the cyclic trimer content CTa of the thus-taken out PES were measured. They were 1.369 g/cm³, 0.80 dl/g, 252°C, 79°C, 27 microequivalents/g, and 0.72 % by weight, respectively.

In the body part of the bottle, EVOH was taken out, and its melting point TMb and density Db were measured. Its melting point TMb was 182°C; and its density Db was 1.181 g/cm³.

The frequency of delamination of the bottles, the haze of the body part of the bottles, and the oxygen transmission rate and the carbon dioxide transmission rate through the bottles were measured, and they were 27 %, 3.0 %, 0.039 ml/bottle·day·atm, and 0.28 ml/bottle·day·atm, respectively.

The thermal stability of EVOH used herein was confirmed in the same manner as in Example 1. The two resins, EVOH and PES prepared herein were molded into a two-resin, three-layered preform of PES/EVOH/PES, through coinjection molding, for which was used the same coinjection stretch blow molding machine as above. Concretely, the temperature of the PES injection zone was 290°C; the temperature of the EVOH injection zone was 230°C; and the temperature of the hot runner block in which the two resins, PES and EVOH are combined was 265° C. In the hot runner block, the two resins PES and EVOH were kept staying at the conditioned temperature for 30 minutes. Then, the combined resins were co-injected into a mold cavity. The temperature of the injection mold core was 15°C; and the temperature of the injection mold cavity was 15°C. The thus-prepared preform was browned in some degree, and its EVOH layer had fish eyes and streaks, and was not uniform in thickness.

### Comparative Example 4:

A thermoplastic polyester resin was prepared in the same manner as in Example 1. As the EVOH resin b1, herein used was the same one as in Example 1. As the EVOH resin b2, herein prepared was EVOH having an ethylene content (ETb2) of 80 mol%, a degree of saponification (SDb2) of 90.0 %, a melt index (MIb2, at 190°C under a load of 2,160 g) of 38.0 g/10 min, and a melting point of 109°C. The phosphate radical content, the Na ion content, the K ion content and the Mg ion content of this EVOH were measured, and were 76 ppm, 68 ppm, 32 ppm and 18 ppm, respectively.

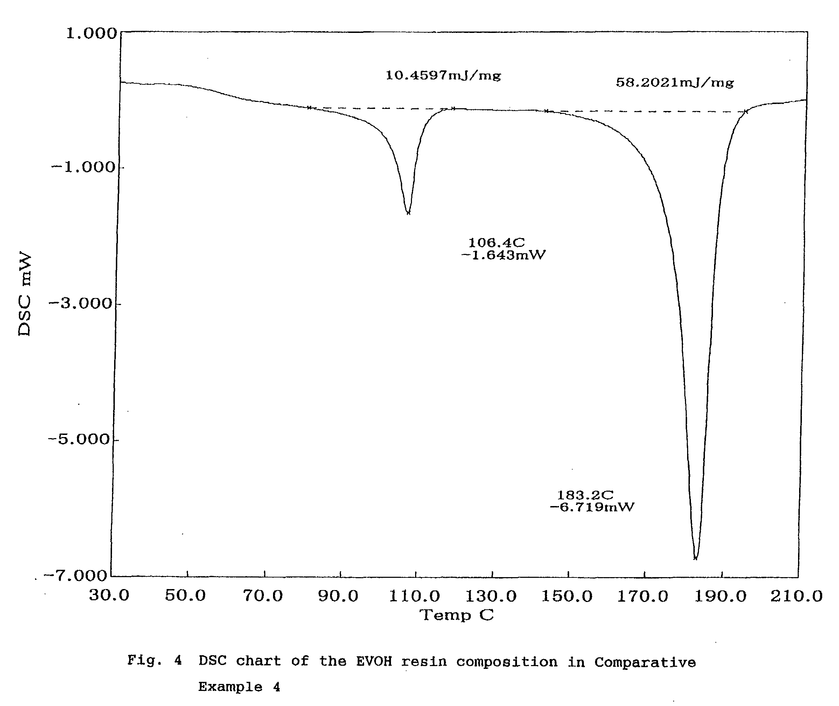

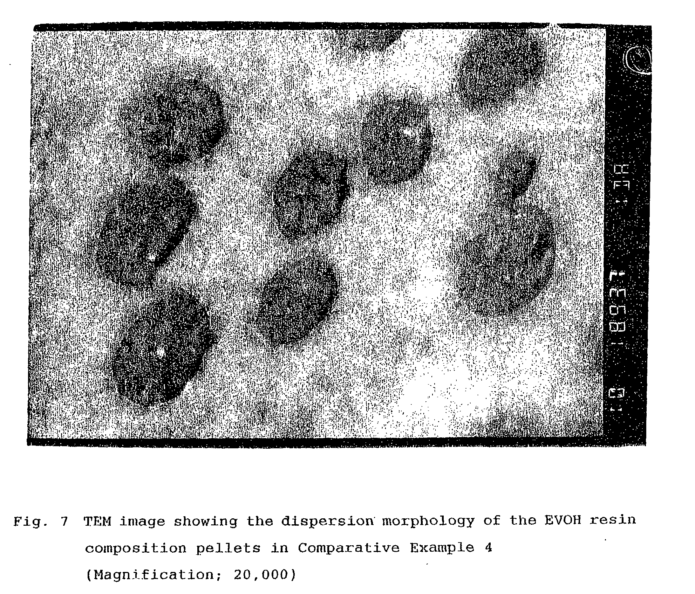

80 parts by weight of the EVOH resin b1, 20 parts by weight of the EVOH resin b2, and 0.016 parts by weight of hydrotalcite (DHT-4A from Kyowa Chemical Industry) were blended in dry, and the resulting blend was pelletized through a 20 mmφ double-screw extruder at 200°C, and dried at 80°C under reduced pressure for 16 hours, in the same manner as in Example 1. The melt index (MIb, at 190°C under a load of 2,160 g) of the EVOH composition was 6.2 g/10 min. Its phosphate radical content, Na ion content, K ion content and Mg ion content were measured, and were 91 ppm, 26 ppm, 12 ppm and 7 ppm, respectively. Its melting point appeared at 183°C and 106°C, and its differential scanning calorimetry (DSC) gave two peaks for crystal fusion (see Fig. 4). Having a mean particle size of about 1 µm, the particles of EVOH (b2) were dispersed in the matrix of EVOH (b1) (see Fig. 7).

From the polyester resin and the EVOH composition prepared in the manner as above, obtained was a two-resin, three-layered preform of PES/EVOH/PES through coinjection molding, like in Example 1.

Next, also like in Example 1, the resulting preform was heated, and subjected to stretch blow molding into a two-resin, three-layered, coinjection stretch blow molded bottle having a capacity of 350 ml. In the body part of the bottle, the inner layer of PES had a mean thickness of 153 µm, the interlayer of EVOH had a mean thickness of 16 µm, and the outer layer of PES had a mean thickness of 96 µm.

In the body part of the bottle, PES of the inner and outer layers was taken out, and the density Da, the intrinsic viscosity IVa, the melting point TMa, the glass transition temperature TGa, the terminal carboxyl content Ca and the cyclic trimer content CTa of the thus-taken out PES were measured. They were 1.369 g/cm³, 0.79 dl/g, 252°C, 79°C, 25 microequivalents/g, and 0.72 % by weight, respectively.

In the body part of the bottle, EVOH was taken out, and its melting point TMb and density Db were measured. Its melting point TMb appeared at 183°C and 106°C; and its density Db was 1.139 g/cm³.

The frequency of delamination of the bottles, the haze of the body part of the bottles, and the oxygen transmission rate and the carbon dioxide transmission rate through the bottles were measured, and they were 58 %, 10.2 %, 0.120 ml/bottle·day·atm, and 0.92 ml/bottle·day·atm, respectively.

The thermal stability of EVOH used herein was confirmed in the same manner as in Example 1. The two resins, EVOH and PES prepared herein were molded into a two-resin, three-layered preform of PES/EVOH/PES, through coinjection molding, for which was used the same coinjection stretch blow molding machine as above. Concretely, the temperature of the PES injection zone was 290°C; the temperature of the EVOH injection zone was 230°C; and the temperature of the hot runner block in which the two resins, PES and EVOH are combined was 265°C. In the hot runner block, the two resins PES and EVOH were kept staying at the conditioned temperature for 30 minutes. Then, the combined resins were co-injected into a mold cavity. The temperature of the injection mold core was 15°C; and the temperature of the injection mold cavity was 15°C. The thus-prepared preform was extremely cloudy and was yellowed in some degree, but did not have fish eyes.

### Comparative Example 5:

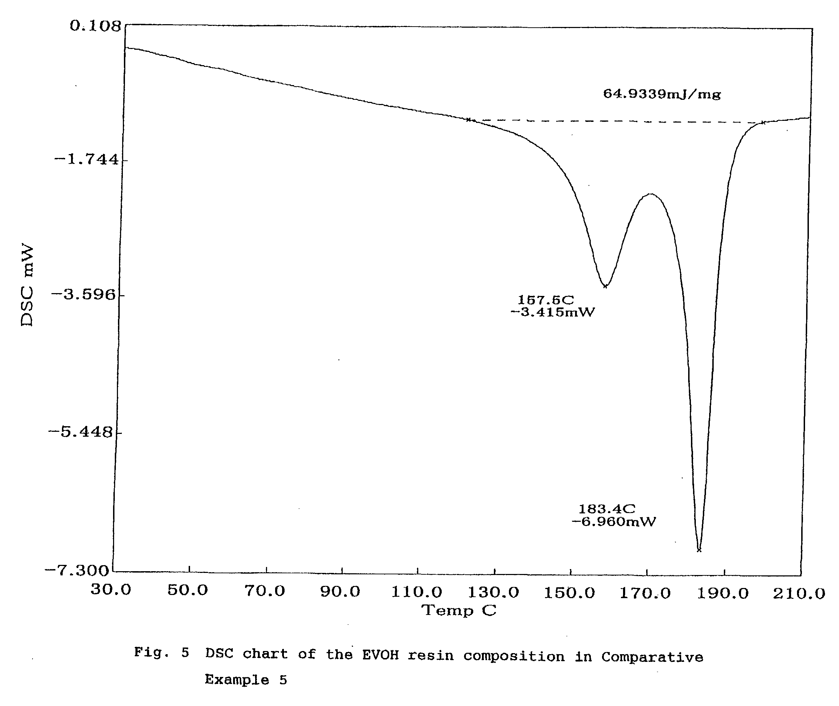

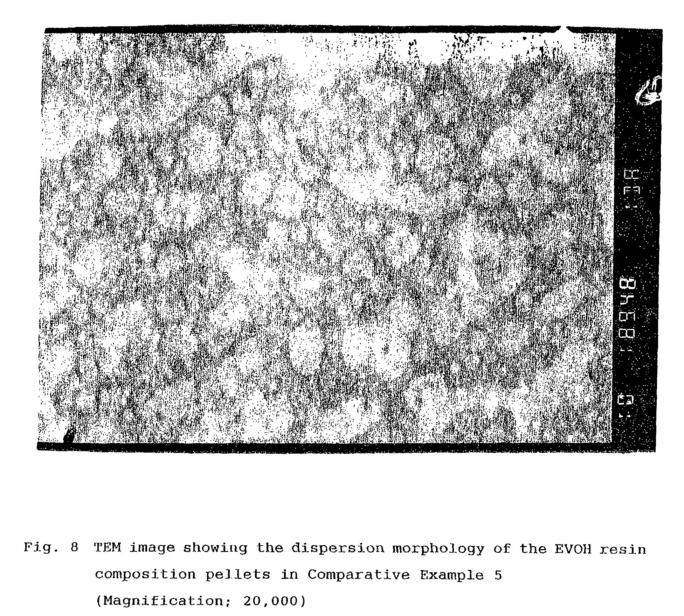

The same thermoplastic polyester resin as in Example 1, the same EVOH resin b1 as in Example 1, and the same EVOH resin b2 as in Example 1 were prepared. 50 parts by weight of the EVOH resin b1, 50 parts by weight of the EVOH resin b2, and 0.016 parts by weight of hydrotalcite (DHT-4A from Kyowa Chemical Industry) were blended in dry, and the resulting blend was pelletized through a 20 mmφ double-screw extruder at 200°C, and dried at 80°C under reduced pressure for 16 hours, in the same manner as in Example 1. The melt index (MIb, at 190°C under a load of 2,160 g) of the EVOH composition was 4.9 g/10 min. Its phosphate radical content, Na ion content, K ion content and Mg ion content were measured, and were 89 ppm, 43 ppm, 21 ppm and 15 ppm, respectively. Its melting point appeared at 183°C and 158°C, and its differential scanning calorimetry (DSC) gave two peaks for crystal fusion (see Fig. 5). The dispersion morphology of the EVOH composition was analyzed in the same manner as above. It was found that, in the EVOH composition, the EVOH resin b2 formed a matrix and the particles of the EVOH resin b1 dispersed in the matrix. In this, the size of the particles of the EVOH resin b1 was uneven (see Fig. 8).

From the polyester resin and the EVOH composition prepared in the manner as above, obtained was a two-resin, three-layered preform of PES/EVOH/PES through coinjection molding, like in Example 1.

Next, also like in Example 1, the resulting preform was heated, and subjected to stretch blow molding into a two-resin, three-layered, coinjection stretch blow molded bottle having a capacity of 350 ml. In the body part of the bottle, the inner layer of PES had a mean thickness of 149 µm, the interlayer of EVOH had a mean thickness of 15 µm, and the outer layer of PES had a mean thickness of 101 µm.

In the body part of the bottle, PES of the inner and outer layers was taken out, and the density Da, the intrinsic viscosity IVa, the melting point TMa, the glass transition temperature TGa, the terminal carboxyl content Ca and the cyclic trimer content CTa of the thus-taken out PES were measured. They were 1.370 g/cm³, 0.79 dl/g, 252°C, 79°C, 26 microequivalents/g, and 0.73 % by weight, respectively.

In the body part of the bottle, EVOH was taken out, and its melting point TMb and density Db were measured. Its melting point TMb appeared at 183°C and 158°C; and its density Db was 1.159 g/cm³.

The frequency of delamination of the bottles, the haze of the body part of the bottles, and the oxygen transmission rate and the carbon dioxide transmission rate through the bottles were measured, and they were 6 %, 4.4 %, 0.063 ml/bottle·day·atm, and 0.45 ml/bottle·day·atm, respectively.

The thermal stability of EVOH used herein was confirmed in the same manner as in Example 1. The two resins, EVOH and PES prepared herein were molded into a two-resin, three-layered preform of PES/EVOH/PES, through coinjection molding, for which was used the same coinjection stretch blow molding machine as above. Concretely, the temperature of the PES injection zone was 290°C; the temperature of the EVOH injection zone was 230°C; and the temperature of the hot runner block in which the two resins, PES and EVOH are combined was 265° C. In the hot runner block, the two resins PES and EVOH were kept staying at the conditioned temperature for 30 minutes. Then, the combined resins were co-injected into a mold cavity. The temperature of the injection mold core was 15°C; and the temperature of the injection mold cavity was 15°C. The thus-prepared preform was browned in some degree, and its EVOH layer had a few fish eyes.

The samples prepared in Examples 1, 2 and Comparative Examples 1 to 5 were analyzed and tested, and their data are given in Tables 1 and 2.

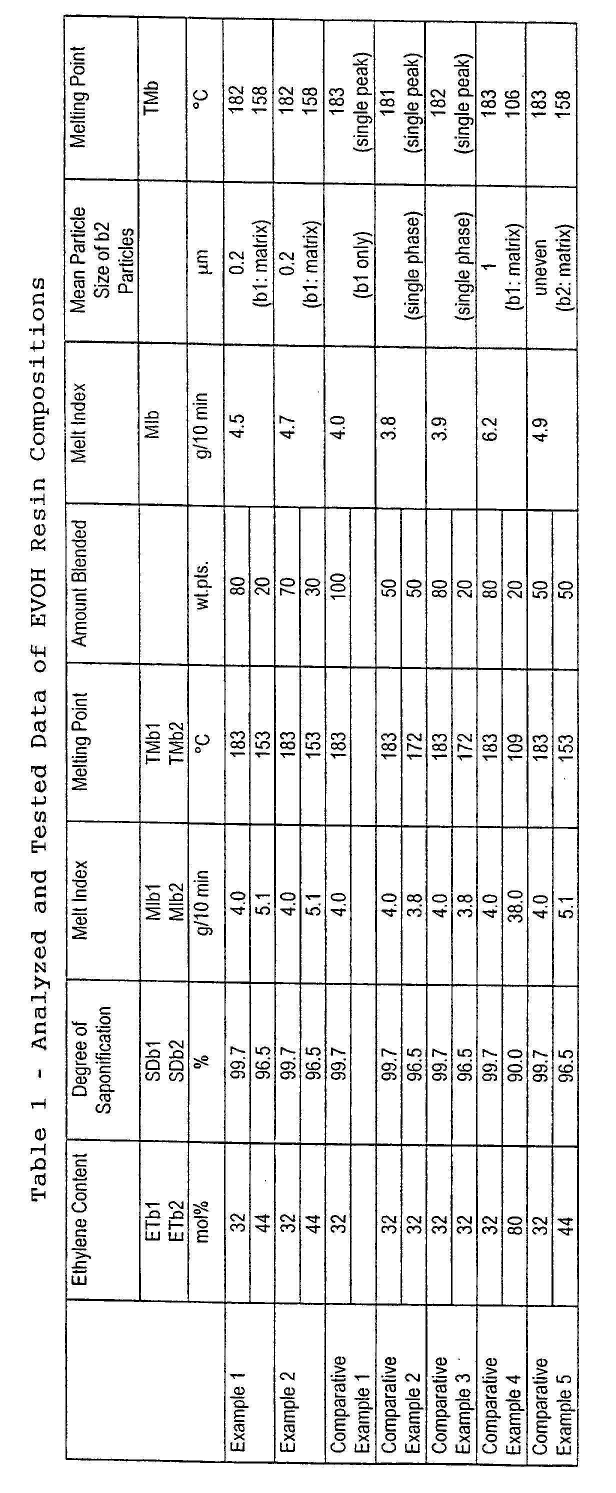

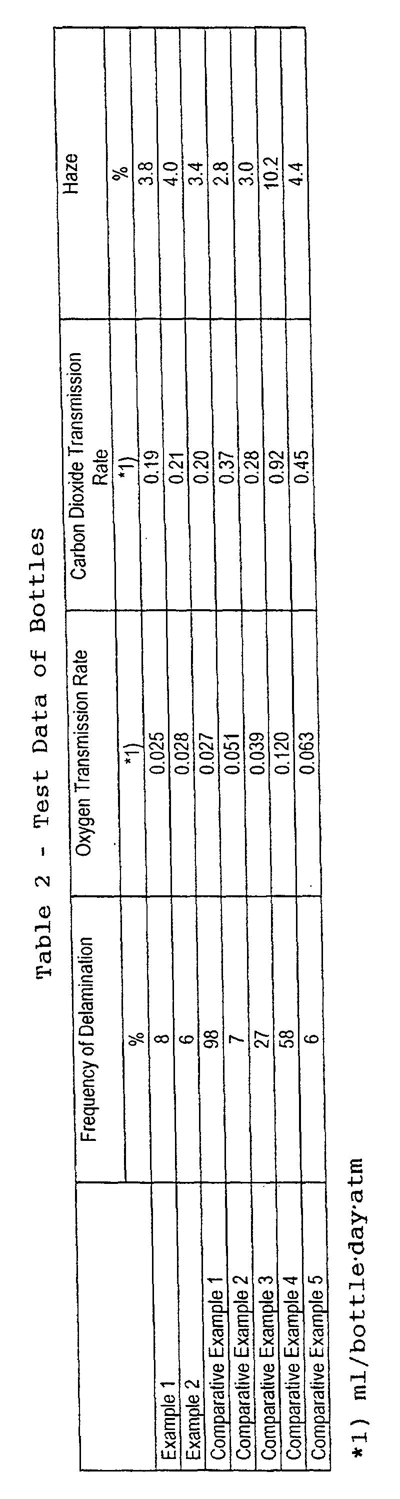

As in the above, it is seen that the coinjection stretch blow molded containers of Examples 1 and 2, in which the EVOH resin composition used satisfies the constitutional requirement of the invention, all had good impact delamination resistance, good gas-barrier properties against oxygen and carbon dioxide, and good transparency. While molded in melt, the resins in these Examples all had good thermal stability.

As opposed to these, a single EVOH resin was used in Comparative Example 1, in which, therefore, the impact delamination resistance of the bottles produced was poor, though the gas-barrier properties and the transparency thereof were good and the thermal stability of the resin used was also good. The present invention is to solve the problem with the single EVOH resin in producing multi-layered containers, not interfering with the gas-barrier properties and the transparency of the containers produced and also not interfering with the thermal stability of the EVOH resin composition used in producing the containers.

In the EVOH resin compositions used in Comparative Examples 2 and 3, the difference in the ethylene content between EVOH (b1) and EVOH (b2) is small, and therefore the difference in the melting point between them is also small. As a result, the EVOH resin compositions both had a single peak for crystal fusion in DSC. In addition, the two resins b1 and b2 are completely miscible with each other and formed a single phase. In other words, the resin b1 could not be a matrix, and the resin b2 could not form particles to be dispersed in a matrix.

The bottles of Comparative Example 2 had good impact delamination resistance and good transparency. However, the EVOH composition used for these contained 50 % by weight of EVOH b2 having a low degree of saponification. As a result, the oxygen and carbon dioxide transmission through the bottles of Comparative Example 2 is 2 times larger than that through the bottles of Examples 1 and 2. In addition, the thermal stability of the EVOH resin composition used in Comparative Example 2 was poor.

In Comparative Example 3, the amount of b2 is smaller than that in Comparative Example 2. Therefore, the impact delamination resistance of the bottles of Comparative Example 3 is poor. In addition, when compared with those of Examples 1 and 2, the gas-barrier properties and the thermal stability of the bottles of Comparative Example 3 are poor.

In the EVOH resin composition used in Comparative Example 4, the difference in the ethylene content, that in the degree of saponification and that in the melt index between EVOH (b1) and EVOH (b2) are all too large. In addition, the size of the particles of b2 therein is also large.

As a result, the impact delamination resistance, the gas-barrier properties and the transparency of the bottles of Comparative Example 4 were all poor.

The starting EVOH (b1) and EVOH (b2) for the resin composition in Comparative Example 5 are both the same as in Examples 1 and 2. However, in Comparative Example 5, the two resins were blended in a ratio of 1/1, and the resin b2 could not be dispersed as particles in the composition.

As a result, the gas-barrier properties of the bottles of Comparative Example 5 were extremely poor, and the thermal stability of the resin composition was also poor, though the impact delamination resistance and the transparency of the bottles were good.

As described hereinabove, the EVOH resin composition specifically defined in the invention has made it possible to provide coinjection stretch blow molded containers having good impact delamination resistance, good gas-barrier properties, good transparency and good thermal stability.

The coinjection stretch blow molded containers of the invention that comprise thermoplastic polyester and EVOH have good impact delamination resistance and good gas-barrier properties even though not having an adhesive resin layer. In addition, their transparency is high, and the resin melts for them are stable. Accordingly, the container are favorable for e.g. beverages, edibles and cosmetics.

## Claims

1. A coinjection stretch blow molded container comprising a thermoplastic polyester layer a and a resin composition layer b of a mixture of two ethylene-vinyl alcohol copolymers b1 and b2 with the layer a being kept in direct contact with the both surfaces of the layer b, which satisfies the following formulae (2) to (5) and (7):$\text{25 ≤ ETb1 ≤ 40}$$\text{99 ≤ SDb1}$$\text{35 ≤ ETb2 ≤ 48}$$\text{92 ≤ SDb2 ≤ 99}$$\text{1 ≤ SDb1 - SDb2 ≤ 8}$ wherein:
ETb1 indicates the ethylene content in mol% of the ethylene-vinyl alcohol copolymer b1,
ETb2 indicates the ethylene content in mol% of the ethylene-vinyl alcohol copolymer b2,
SDb1 indicates the degree of saponification in % of the ethylene vinyl alcohol copolymer b1, and
SDb2 indicates the degree of saponification in % of the ethylene vinyl alcohol copolymer b2,
**characterized in that** the morphology of the resin composition is such that the particles of the ethylene-vinyl alcohol copolymer b2 are dispersed in the matrix of the ethylene-vinyl alcohol copolymer b1, and the resin composition gives at least two peaks for crystal fusion in its differential scanning calorimetry (DSC) and further satisfies the following formulae (1) and (6):$\text{60/40 ≤ Wb1/Wb2 ≤ 90/10}$$\text{8 ≤ ETb2 - ETb1 ≤ 23}$ wherein:
Wb1 indicates the amount by weight of the ethylene-vinyl alcohol copolymer b1 in the resin composition,
Wb2 indicates the amount by weight of the ethylene-vinyl alcohol copolymer b2 in the resin composition,
and ETb1 and ETb2 are as defined above.

2. The coinjection stretch blow molded container as claimed in claim 1, which satisfies the following formula (8):$\text{0.1 ≤ MIb1/MIb2 ≤ 10}$ wherein;
MIb1 indicates the melt index expressed in g/10 min, and measured at 190°C under a load of 2160 g of the ethylene-vinyl alcohol copolymer b1 , and
MIb2 indicates the melt index expressed in g/10 min, and measured at 190°C under a load of 2160 g of the ethylene-vinyl alcohol copolymer b2.

3. The coinjection stretch blow molded container as claimed in any of claims 1 or 2, wherein the intrinsic viscosity IVa in dl/g of the thermoplastic polyester satisfies the following formula (9) and the melt index MIb expressed in g/10 min, and measured at 190°C under a load of 2160 g of the resin composition satisfies the following formula (10):$\text{0.60 ≤ IVa ≤ 0.90}$$\text{0.1 ≤ MIb ≤ 10}$

4. The coinjection stretch blow molded container as claimed in any of claims 1 to 3, of which the body has a haze of at most 5 %.

5. Use of the coinjection stretch blow molded container as claimed in any of claims 1 to 4, as a container for carbonated beverages.

6. The coinjection stretch blow molded container as claimed in any of claims 1 to 4 which has a capacity of at most 800 ml.

7. A preform for a coinjection stretch blow molded container, said preform comprising a thermoplastic polyester layer a and a resin composition layer b of a mixture of two ethylene-vinyl alcohol copolymers b1 and b2 with the layer a being kept in direct contact with the both surfaces of the layer b, which satisfies the following formulae (2) to (5) and (7):$\text{25 ≤ ETb1 ≤ 40}$$\text{99 ≤ SDb1}$$\text{35 ≤ ETb2 ≤ 48}$$\text{92 ≤ SDb2 ≤ 99}$$\text{1 ≤ SDb1 - SDb2 ≤ 8}$ wherein:
ETb1 indicates the ethylene content in mol% of the ethylene-vinyl alcohol copolymer b1,
ETb2 indicates the ethylene content in mol% of the ethylene-vinyl alcohol copolymer b2,
SDb1 indicates the degree of saponification in % of the ethylene vinyl alcohol copolymer b1, and
SDb2 indicates the degree of saponification in % of the ethylene vinyl alcohol copolymer b2,
**characterized in that** the morphology of the resin composition is such that the particles of the ethylene-vinyl alcohol copolymer b2 are dispersed in the matrix of the ethylene-vinyl alcohol copolymer b1, and the resin composition gives at least two peaks for crystal fusion in its differential scanning calorimetry (DSC) and further satisfies the following formulae (1) and (6):$\text{60/40 ≤ Wb1/Wb2 ≤ 90/10}$$\text{8 ≤ ETb2 - ETb1 ≤ 23}$ wherein:
Wb1 indicates the amount by weight of the ethylene-vinyl alcohol copolymer b1 in the resin composition,
Wb2 indicates the amount by weight of the ethylene-vinyl alcohol copolymer b2 in the resin composition,
and ETb1 and ETb2 are as defined above.

## Patentansprüche

1. Kospritzgegossener, streckgeblasener Behälter, umfassend eine thermoplastische Polyesterschicht a und eine Harzzusammensetzungsschicht b aus einem Gemisch von zwei Etyhlenvinylalkoholcopolymeren b1 und b2, wobei die Schicht a in direktem Kontakt mit beiden Oberflächen der Schicht b gehalten wird, wobei die nachstehenden Formeln (2) bis (5) und (7) erfüllt sind:$\text{25 ≤ ETb1 ≤ 40}$$\text{99 ≤ SDb1}$$\text{35 ≤ ETb2 ≤ 48}$$\text{92 ≤ SDb2 ≤ 99}$$\text{1 ≤ SDb1 - SDb2 ≤ 8}$ wobei:
ETb1 den Ethylengehalt in mol % des Ethylenvinylalkoholcopolymers b1 angibt,
ETb2 den Ethylengehalt in mol % des Ethylenvinylalkoholcopolymers b2 angibt,
SDb1 den Verseifungsgrad in % des Ethylenvinylalkoholcopolymers b1 angibt, und
SDb2 den Verseifungsgrad in % des Ethylenvinylalkoholcopolymers b2 angibt,
**dadurch gekennzeichnet, dass** die Morphologie der Harzzusammensetzung derartig ist, dass die Teilchen des Ethylenvinylalkoholcopolymers b2 in der Matrix aus dem Ethylenvinylalkoholcopolymer b1 dispergiert sind, und die Harzzusammensetzung mindestens zwei Peaks aufgrund des Schmelzens von Kristallen in ihrem Differentialthermoanalyse(DSC)-Diagramm aufweist und weiterhin die nachstehenden Formeln (1) und (6) erfüllt:$\text{60/40 ≤ Wb1/Wb2 ≤ 90/10}$$\text{8 ≤ ETb2 - ETb1 ≤ 23}$ wobei:
Wb1 die Gewichtsmenge des Ethylenvinylalkoholcopolymers b1 in der Harzzusammensetzung angibt,
Wb2 die Gewichtsmenge des Ethylenvinylalkoholcopolymers b2 in der Harzzusammensetzung angibt,
und ETb1 und ETb2 wie vorstehend definiert sind.

2. Kospritzgegossener, streckgeblasener Behälter gemäß Anspruch 1, der die nachstehende Formel (8) erfüllt:$\text{0,1 ≤ MIb1/MIb2 ≤ 10}$ wobei:
MIb1 den in g/10 min ausgedrückten und bei 190°C unter einer Belastung von 2160 g gemessenen Schmelzindex des Ethylenvinylalkoholcopolymers b1 angibt, und
MIb2 den in g/10 min ausgedrückten und bei 190°C unter einer Belastung von 2160 g gemessenen Schmelzindex des Ethylenvinylalkoholcopolymers b2 angibt.

3. Kospritzgegossener, streckgeblasener Behälter gemäß einem der Ansprüche 1 oder 2, wobei die Grenzviskosität IVa in dl/g des thermoplastischen Polyesters die nachstehende Formel (9) erfüllt und der in g/10 min ausgedrückte und bei 190°C unter einer Belastung von 2160 g gemessene Schmelzindex der Harzzusammensetzung die nachstehende Formel (10) erfüllt:$\text{0,60 ≤ IVa ≤ 0,90}$$\text{0,1 ≤ MIb ≤ 10}$

4. Kospritzgegossener, streckgeblasener Behälter gemäß einem der Ansprüche 1 bis 3, dessen Körper eine Trübung von höchstens 5 % aufweist.

5. Verwendung eines kospritzgegossenen, streckgeblasenen Behälters nach einem der Ansprüche 1 bis 4 als Behälter für kohlensäurehaltige Getränke.

6. Kospritzgegossener, streckgeblasener Behälter gemäß einem der Ansprüche 1 bis 4, welcher einen Rauminhalt von höchstens 800 ml aufweist.

7. Vorformling für einen kospritzgegossenen, streckgeblasenen Behälter, wobei der Vorformling eine thermoplastische Polyesterschicht a und eine Harzzusammensetzungschicht b aus einem Gemisch von zwei Etyhlenvinylalkoholcopolymeren b1 und b2 umfasst, wobei die Schicht a in direktem Kontakt mit den beiden Oberflächen der Schicht b gehalten wird, wobei die nachstehenden Formeln (2) bis (5) und (7) erfüllt sind:$\text{25 ≤ ETb1 ≤ 40}$$\text{99 ≤ SDb1}$$\text{35 ≤ ETb2 ≤ 48}$$\text{92 ≤ SDb2 ≤ 99}$$\text{1 ≤ SDb1 - SDb2 ≤ 8}$ wobei:
ETb1 den Ethylengehalt in mol % des Ethylenvinylalkoholcopolymers b1 angibt,
ETb2 den Ethylengehalt in mol % des Ethylenvinylalkoholcopolymers b2 angibt,
SDb1 den Verseifungsgrad in % des Ethylenvinylalkoholcopolymers b1 angibt, und
SDb2 den Verseifungsgrad in % des Ethylenvinylalkoholcopolymers b2 angibt,
**dadurch gekennzeichnet, dass** die Morphologie der Harzzusammensetzung derartig ist, dass die Teilchen des Ethylenvinylalkoholcopolymers b2 in der Matrix aus dem Ethylenvinylalkoholcopolymer b1 dispergiert sind, und die Harzzusammensetzung mindestens zwei Peaks aufgrund des Schmelzens von Kristallen in ihrem Differentialthermoanalyse(DSC)-Diagramm aufweist und weiterhin die nachstehenden Formeln ( 1 ) und (6) erfüllt:$\text{60/40 ≤ Wb1/Wb2 ≤ 90/10}$$\text{8 ≤ ETb2-ETb1 ≤ 23}$ wobei:
Wb1 die Gewichtsmenge des Ethylenvinylalkoholcopolymers b1 in der Harzzusammensetzung angibt,
Wb2 die Gewichtsmenge des Ethylenvinylalkoholcopolymers b2 in der Harzzusammensetzung angibt,
und ETb1 und ETb2 wie vorstehend definiert sind.

## Revendications

1. Récipient formé par étirage-soufflage co-injection comprenant une couche a de polyester thermoplastique et une couche b de composition de résine d'un mélange de deux copolymères d'éthylène vinyle alcool b1 et b2, la couche a étant maintenue en contact direct avec les deux surfaces de la couche b, qui satisfait aux formules suivantes (2) à (5) et (7) :$\text{25 ≤ ETb1 ≤ 40}$$\text{99 ≤ SDb1}$$\text{35 ≤ ETb2 ≤ 48}$$\text{92 ≤ SDb2 ≤ 99}$$\text{1 ≤ SDb1 - SDb2 ≤ 8}$ dans lesquelles :
ETb1 indique la teneur en éthylène en mol% du copolymère d'éthylène vinyle alcool b1,
ETb2 indique la teneur en éthylène en mol% du copolymère d'éthylène vinyle alcool b2,
SDb1 indique le degré de saponification en % du copolymère d'éthylène vinyle alcool b1, et
SDb2 indique le degré de saponification en % du copolymère d'éthylène vinyle alcool b2,
**caractérisé en ce que** la morphologie de la composition de résine est telle que les particules du copolymère d'éthylène vinyle alcool b2 sont dispersées dans la matrice du copolymère d'éthylène vinyle alcool b1, et la composition de résine donne au moins deux pics pour la fusion cristalline dans son analyse calorimétrique différentielle à compensation de puissance (DSC) et satisfait en outre aux formules suivantes (1) et (6) :$\text{60/40 ≤ Wb1/Wb2 ≤ 90/10}$$\text{8 ≤ ETb2 - ETb1 ≤ 23}$ dans lesquelles :
Wb1 indique la quantité en poids du copolymère d'éthylène vinyle alcool b1 dans la composition de résine,
Wb2 indique la quantité en poids du copolymère d'éthylène vinyle alcool b2 dans la composition de résine,
et ETb1 et ETb2 sont comme définis ci-dessus.

2. Récipient formé par étirage-soufflage co-injection selon la revendication 1, qui satisfait à la formule suivante (8) :$\text{0,1 ≤ MIb1/MIb2 ≤ 10}$ dans laquelle :
MIb1 indique l'indice de fluage exprimé en g/10 min, et mesuré à 190°C sous une charge de 2160 g du copolymère d'éthylène vinyle alcool b1, et
MIb2 indique l'indice de fluage exprimé en g/10 min, et mesuré à 190°C sous une charge de 2160 g du copolymère d'éthylène vinyle alcool b2.

3. Récipient formé par étirage-soufflage co-injection selon la revendication 1 ou 2, dans lequel la viscosité intrinsèque IVa en dl/g du polyester thermoplastique satisfait à la formule suivante (9) et l'indice de fluage MIb exprimé en g/10 min, et mesuré à 190°C sous une charge de 2160 g de la composition de résine satisfait à la formule suivante (10) :$\text{0,60 ≤ IVa ≤ 0,90}$$\text{0,1 ≤ MIb ≤ 10}$

4. Récipient formé par étirage-soufflage co-injection selon l'une quelconque des revendications 1 à 3, dont le corps a un trouble qui ne dépasse pas 5 %.

5. Utilisation du récipient formé par étirage-soufflage co-injection selon l'une quelconque des revendications 1 à 4, comme récipient pour des boissons gazeuses.

6. Récipient formé par étirage-soufflage co-injection selon l'une quelconque des revendications 1 à 4, qui a une capacité ne dépassant pas 800 ml.

7. Préforme pour un récipient formé par étirage-soufflage co-injection, ladite préforme comprenant une couche a de polyester thermoplastique et une couche b de composition de résine d'un mélange de deux copolymères d'éthylène vinyle alcool b1 et b2, avec la couche a maintenue en contact direct avec les deux surfaces de la couche b, qui satisfait aux formules suivantes (2) à (5) et (7) :$\text{25 ≤ ETb1 ≤ 40}$$\text{99 ≤ SDb1}$$\text{35 ≤ ETb2 ≤ 48}$$\text{92 ≤ SDb2 ≤ 99}$$\text{1 ≤ SDb1 - SDb2 ≤ 8}$ dans lesquelles :
ETb1 indique la teneur en éthylène en mol% du copolymère d'éthylène vinyle alcool b1,
ETb2 indique la teneur en éthylène en mol% du copolymère d'éthylène vinyle alcool b2,
SDb1 indique le degré de saponification en % du copolymère d'éthylène vinyle alcool b1, et
SDb2 indique le degré de saponification en % du copolymère d'éthylène vinyle alcool b2,
**caractérisée en ce que** la morphologie de la composition de résine est telle que les particules du copolymère d'éthylène vinyle alcool b2 sont dispersées dans la matrice du copolymère d'éthylène vinyle alcool b1, et la composition de résine donne au moins deux pics pour la fusion cristalline dans son analyse calorimétrique différentielle à compensation de puissance (DSC) et satisfait en outre aux formules suivantes (1) et (6) :$\text{60/40 ≤ Wb1/Wb2 ≤ 90/10}$$\text{8 ≤ ETb2 - ETb1 ≤ 23}$ dans lesquelles :
Wb1 indique la quantité en poids du copolymère d'éthylène vinyle alcool b1 dans la composition de résine,
Wb2 indique la quantité en poids du copolymère d'éthylène vinyle alcool b2 dans la composition de résine,
et ETb1 et ETb2 sont comme définis ci-dessus.
